# EUROPEAN PATENT APPLICATION

(11) **EP 4 818 214 A1**
(43) Date of publication of application: **07.10.2026**
(21) Application number: 24897374.5
(22) Date of filing: 18.11.2024
(51) Int. Cl.: C08F 2/18, B01J 13/18

(54) **HOLLOW PARTICLE**

(30) Priority: 30.11.2023 JP 2023203260
(71) Applicant: Zeon Corporation, Tokyo 100-8246 (JP)
(72) Inventor: YAGYU, Sakyo, Tokyo 100-8246 (JP); MIYAO, Haruna, Tokyo 100-8246 (JP)
(74) Representative: Kraus & Lederer PartGmbB
(86) International application number: PCT/JP2024/040876
(87) International publication number: WO 2025/115688

(57) **Abstract**

Provided are hollow particles each including a shell containing a resin and a hollow portion surrounded by the shell, wherein the hollow particles have a void ratio of 50% or more, and when the hollow particles are subjected to a heat treatment in air at 130°C for 240 hours, a change rate ΔPᵣ of a peak intensity ratio Pᵣ determined by infrared spectroscopy before and after the heat treatment is 5% or less, the peak intensity ratio Pᵣ being calculated from Expression (1) below: 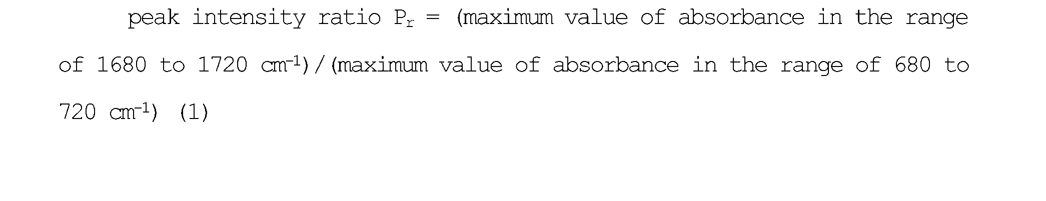 peak intensity ratio Pr = (maximum value of absorbance in the range of 1680 to 1720 cm-1)/(maximum value of absorbance in the range of 680 to 720 cm-1) (1)

## Description

### TECHNICAL FIELD

The present invention relates to hollow particles, and more specifically relates to hollow particles which have excellent dielectric properties and undergo a reduced reduction in dielectric properties under a high temperature condition.

### BACKGROUND ART

Hollow particles such as hollow resin particles produced by polymerization of a polymerizable monomer are particles having hollow portions inside the particles, and are used as additives for molded articles such as electronic materials, light reflecting plates, thermal insulation materials, and sound shielding materials (additives to be added to resins for molding).

As one of techniques related to such hollow particles, for example, Patent Document 1 discloses hollow particles each comprising a shell containing a resin and a hollow portion surrounded by the shell, wherein the hollow particles have a void ratio of 50% or more, and a polymer forming the shell has a residual double bond ratio in the range of 11.1 to 24.5%. In the hollow particles disclosed in Patent Document 1, although the dielectric loss tangent at a high frequency is reduced, a further improvement in dielectric properties (relative permittivity and dielectric loss tangent), particularly, a further improvement in dielectric properties under a high temperature condition has been demanded.

### RELATED ART DOCUMENT

### PATENT DOCUMENT

Patent Document 1: WO 2023/106307

### SUMMARY OF THE INVENTION

### PROBLEM TO BE SOLVED BY THE INVENTION

An object of the present invention is to provide hollow particles which have excellent dielectric properties and undergo a reduced reduction in dielectric properties under a high temperature condition.

### MEANS FOR SOLVING PROBLEMS

The present inventors, who have conducted research to solve the above object, have found that the above object can be achieved by hollow particles each comprising a shell containing a resin and a hollow portion surrounded by the shell, wherein a void ratio and a change rate ΔPᵣ of a peak intensity ratio Pᵣ determined by infrared spectroscopy before and after a heat treatment when the heat treatment is performed under specific conditions are controlled within predetermined ranges, and have completed this invention.

Specifically, the present invention provides hollow particles below.
[1] Hollow particles each comprising a shell containing a resin and a hollow portion surrounded by the shell,
   wherein the hollow particles have a void ratio of 50% or more, and
   when the hollow particles are subjected to a heat treatment in air at 130°C for 240 hours, a change rate ΔPᵣ of a peak intensity ratio Pᵣ determined by infrared spectroscopy before and after the heat treatment is 5% or less, the peak intensity ratio Pᵣ being calculated from Expression (1) below: 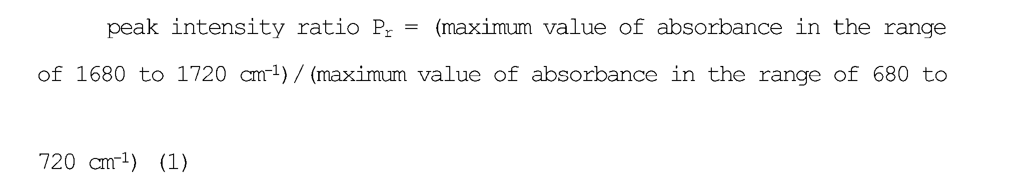 peak intensity ratio Pr = (maximum value of absorbance in the range of 1680 to 1720 cm-1)/(maximum value of absorbance in the range of 680 to 720 cm-1) (1)
[2] The hollow particles according to [1], wherein a shell polymer forming the resin has a residual double bond ratio of 15% or less.
[3] The hollow particles according to [1] or [2], wherein the hollow particles have a proportional water content of 2.5% by mass or less.
[4] The hollow particles according to any one of [1] to [3], wherein the shell polymer forming the resin contains 80% by mass or more of a hydrocarbon monomer unit.
[5] The hollow particles according to any one of [1] to [4], wherein the shell polymer forming the resin contains a cross-linkable monomer unit and a non-cross-linkable monomer unit, and
   the proportion of the non-cross-linkable monomer unit contained in the shell polymer is 40 to 80% by mass.
[6] The hollow particles according to any one of [1] to [5], wherein the hollow particles have a volume average particle size of 1 to 10 µm.

### EFFECTS OF THE INVENTION

The present invention provides hollow particles which have excellent dielectric properties and undergo a reduced reduction in dielectric properties under a high temperature condition.

### DESCRIPTION OF EMBODIMENTS

### <Hollow particle>

The hollow particles according to the present invention are hollow particles each comprising a shell containing a resin and a hollow portion surrounded by the shell, wherein the hollow particles have a void ratio of 50% or more, and when the hollow particles are subjected to a heat treatment in air at 130°C for 240 hours, a change rate ΔPᵣ of a peak intensity ratio Pᵣ determined by infrared spectroscopy before and after the heat treatment is 5% or less, the peak intensity ratio Pᵣ being calculated from Expression (1) below: 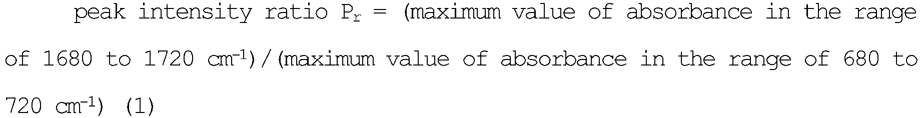 peak intensity ratio Pr = (maximum value of absorbance in the range of 1680 to 1720 cm-1)/(maximum value of absorbance in the range of 680 to 720 cm-1) (1)

The shell included in the hollow particles according to the present invention contains a resin formed from a shell polymer.

The shell polymer is a polymer used to form the shell of the hollow particle, and is usually obtained by polymerization of a polymerizable monomer. Examples of the polymerizable monomer include cross-linkable monomers and non-cross-linkable monomers. The cross-linkable monomer is a monomer which has two or more polymerizable functional groups and forms cross-linking bonds in the resin as a result of a polymerization reaction. The non-cross-linkable monomer is a polymerizable monomer having only one polymerizable functional group.

As the cross-linkable monomer, a compound having two or more ethylenically unsaturated bonds as a polymerizable functional group is usually used. Examples of the cross-linkable monomer include cross-linkable hydrocarbon monomers and heteroatom-containing cross-linkable monomers.

Examples of the cross-linkable hydrocarbon monomer include, but should not be limited to, divinylbenzene, divinyldiphenyl, divinylnaphthalene, 1,3-pentadiene, 1,4-pentadiene, 1,5-hexadiene, 1,7-octadiene, and the like. Among these, divinylbenzene is preferred.

Examples of the heteroatom-containing cross-linkable monomers include, but should not be limited to, bifunctional heteroatom-containing cross-linkable monomers such as diallyl phthalate, allyl (meth)acrylate [which indicates allyl acrylate and/or allyl methacrylate. Hereinafter, the same is applied.], ethylene glycol di(meth)acrylate, and pentaerythritol di(meth)acrylate; tri- or higher functional heteroatom-containing cross-linkable monomers such as trimethylolpropane tri(meth)acrylate, ditrimethylolpropane tetra(meth)acrylate, pentaerythritol tri(meth)acrylate, pentaerythritol tetra(meth)acrylate, ethoxylated pentaerythritol tetra(meth)acrylate, dipentaerythritol hexa(meth)acrylate, and dipentaerythritol poly(meth)acrylate; and the like. Among these, allyl (meth)acrylate, ethylene glycol di(meth)acrylate, pentaerythritol tetra(meth)acrylate, dipentaerythritol poly(meth)acrylate, and pentaerythritol tri(meth)acrylate are preferred, allyl (meth)acrylate, ethylene glycol di(meth)acrylate, and pentaerythritol tetra(meth)acrylate are more preferred, and allyl methacrylate, ethylene glycol dimethacrylate, and pentaerythritol tetraacrylate are still more preferred. The above-mentioned heteroatom-containing cross-linkable monomers may be used as a protected carboxyl group-containing monomer. In this case, a carboxyl group can be introduced to the shell polymer by performing polymerization, followed by deprotection. Among the heteroatom-containing cross-linkable monomers described above, preferred protected carboxyl group-containing monomers are allyl (meth)acrylate and ethylene glycol di(meth)acrylate.

As the cross-linkable monomers, cross-linkable hydrocarbon monomers are preferred, and divinylbenzene is preferred. When the heteroatom-containing cross-linkable monomer is used as the cross-linkable monomer, more preferred are allyl (meth)acrylate, ethylene glycol di(meth)acrylate, and pentaerythritol tetra(meth)acrylate, and still more preferred are allyl methacrylate, ethylene glycol dimethacrylate, and pentaerythritol tetraacrylate.

These cross-linkable monomers can be used alone or in combination. For example, a cross-linkable hydrocarbon monomer can be used in combination with a heteroatom-containing cross-linkable monomer. As the heteroatom-containing cross-linkable monomer, two or more heteroatom-containing cross-linkable monomers can be used in combination. For example, a bifunctional heteroatom-containing cross-linkable monomer can be used in combination with a tri- or higher functional heteroatom-containing cross-linkable monomer.

The non-cross-linkable monomer is a monomer having only one polymerizable functional group, and a compound having an ethylenically unsaturated bond as the polymerizable functional group is generally used. Examples of the non-cross-linkable monomer include non-cross-linkable hydrocarbon monomers and heteroatom-containing non-cross-linkable monomers.

Examples of the non-cross-linkable hydrocarbon monomers include, but should not be limited to, aromatic vinyl monomers such as styrene, ethylvinylbenzene, vinyltoluene, α-methylstyrene, p-methylstyrene, halogenated styrene, vinyl biphenyl, and vinylnaphthalene; monoolefin monomers such as ethylene, propylene, butylene, 1-pentene, 1-hexene, and 4-methyl-1-pentene; diene monomers such as butadiene and isoprene; and the like. Among these, preferred are styrene and ethylvinylbenzene.

Examples of the heteroatom-containing non-cross-linkable monomers include, but should not be limited to, hydrophilic non-cross-linkable monomers; acrylic monovinyl monomers such as methyl (meth)acrylate, ethyl (meth)acrylate, t-butyl (meth)acrylate, 2-ethylhexyl (meth)acrylate, lauryl (meth)acrylate, glycidyl (meth)acrylate, and 2-hydroxyethyl (meth)acrylate; amino group-containing monovinyl monomers such as dimethylaminoethyl (meth)acrylate, diethylaminoethyl (meth)acrylate, t-butylaminoethyl (meth)acrylate, and 4-vinylbenzylamine; carboxylic acid vinyl ester monomers such as vinyl acetate; vinyl halide monomers such as vinyl chloride; vinylidene halide monomers such as vinylidene chloride; vinylpyridine monomers; and the like. The acrylic monovinyl monomers may be used as a protected carboxyl group-containing monomer. In this case, a carboxyl group can be introduced to the shell polymer by performing polymerization, followed by deprotection. Among these acrylic monovinyl monomers, preferred protected carboxyl group-containing monomers are methyl (meth)acrylate, ethyl (meth)acrylate, and t-butyl (meth)acrylate.

The hydrophilic non-cross-linkable monomers preferably have a solubility in water of 1% by mass or more. Examples of the hydrophilic non-cross-linkable monomers include, but should not be limited to, non-cross-linkable monomers having a hydrophilic group, such as acid group-containing monomers, hydroxyl group-containing monomers, amide group-containing monomers, and polyoxyethylene group-containing monomers.

The acid group-containing monomer indicates a monomer containing an acid group. The acid group herein includes both of proton donating groups (Bronsted acid groups) and electron-pair receiving groups (Lewis acid groups). When the acid group-containing monomer is used as the hydrophilic monomer, hollow particles having further enhanced heat resistance can be obtained.

The acid group-containing monomer is not particularly limited as long as it has an acid group, and examples thereof include carboxyl group-containing monomers, sulfonic acid group-containing monomers, and the like.

Examples of the carboxyl group-containing monomers include ethylenically unsaturated carboxylic acid monomers such as acrylic acid, methacrylic acid, crotonic acid, cinnamic acid, itaconic acid, fumaric acid, maleic acid, and butene tricarboxylic acid; monoalkyl esters of unsaturated dicarboxylic acids, such as monoethyl itaconate, monobutyl fumarate, and monobutyl maleate; and the like. Examples of the sulfonic acid group-containing monomers include styrenesulfonic acid and the like.

Examples of the hydroxyl group-containing monomers include 2-hydroxyethyl (meth)acrylate, 2-hydroxypropyl (meth)acrylate, 4-hydroxybutyl (meth)acrylate, and the like.

Examples of the amide group-containing monomers include acrylamide, dimethylacrylamide, and the like.

Examples of the polyoxyethylene-group containing monomers include methoxypolyethylene glycol (meth)acrylate, and the like.

As the non-cross-linkable monomer, the non-cross-linkable hydrocarbon monomers are preferred, and styrene and ethylvinylbenzene are more preferred. When a heteroatom-containing non-cross-linkable monomer is used, preferred are amino group-containing monovinyl monomers and protected carboxyl group-containing monomers, more preferred are amino group-containing monovinyl monomers, still more preferred are t-butylaminoethyl (meth)acrylate and 4-vinylbenzylamine, and particularly preferred is t-butylaminoethyl (meth)acrylate.

These non-cross-linkable monomers can be used alone or in combination. For example, a non-cross-linkable hydrocarbon monomer can be used in combination with a heteroatom-containing non-cross-linkable monomer.

The shell polymer is preferably obtained by polymerizing a cross-linkable monomer and a non-cross-linkable monomer as polymerizable monomers. Specifically, the shell polymer preferably contains a cross-linkable monomer unit and a non-cross-linkable monomer unit, more preferably contains at least a cross-linkable hydrocarbon monomer unit as the cross-linkable monomer unit, and more preferably contains at least a non-cross-linkable hydrocarbon monomer unit as the non-cross-linkable monomer unit.

The proportion of the cross-linkable monomer unit in the total monomer units in the shell polymer is not particularly limited. To further suppress a reduction in dielectric properties under a high temperature condition, the lower limit is preferably 20% by mass or more, more preferably 25% by mass or more, still more preferably 30% by mass or more, particularly preferably 35% by mass or more, and the upper limit is preferably 65% by mass or less, more preferably 60% by mass or less, still more preferably 55% by mass or less, particularly preferably 50% by mass or less.

The proportion of the non-cross-linkable monomer unit in the total polymerizable monomer units in the shell polymer is not particularly limited. To further suppress a reduction in dielectric properties under a high temperature condition, the lower limit is preferably 35% by mass or more, more preferably 40% by mass or more, still more preferably 45% by mass or more, particularly preferably 50% by mass or more, and the upper limit is preferably 80% by mass or less, more preferably 75% by mass or less, still more preferably 70% by mass or less, particularly preferably 65% by mass or less.

To obtain hollow particles having a higher void ratio and more excellent dielectric properties, the shell polymer preferably contains a hydrocarbon monomer unit (unit of a monomer composed of only a carbon atom and a hydrogen atom) as a monomer unit forming the shell polymer in a proportion of 80% by mass or more. The proportion of the hydrocarbon monomer unit in the shell polymer is more preferably 85% by mass or more, still more preferably 90% by mass or more.

Examples of a hydrocarbon monomer forming the hydrocarbon monomer unit include the above-described cross-linkable hydrocarbon monomers and the above-described non-cross-linkable hydrocarbon monomers.

When extremely excellent electrical insulation properties are required, the proportion of the hydrocarbon monomer unit in the shell polymer is preferably 95% by mass or more, more preferably 98% by mass or more, still more preferably 100% by mass (where the shell polymer is composed of only the hydrocarbon monomer unit).

The shell polymer may contain a heteroatom-containing monomer unit as a monomer unit forming the shell polymer. Examples of heteroatom-containing monomers forming the heteroatom-containing monomer unit include the above-mentioned heteroatom-containing cross-linkable monomers and the above-mentioned heteroatom-containing non-cross-linkable monomers.

The proportion of the heteroatom-containing monomer unit in the shell polymer is not particularly limited. To obtain hollow particles having a higher void ratio and more excellent dielectric properties, the proportion is preferably 0 to 20% by mass, more preferably 0 to 15% by mass, still more preferably 0 to 10% by mass.

When extremely excellent electrical insulation properties are required, the proportion of the heteroatom-containing monomer unit in the shell polymer is preferably 0 to 5% by mass, more preferably 0 to 2% by mass, still more preferably 0% by mass (where the shell polymer does not contain the heteroatom-containing monomer unit).

Further, the proportion of the carboxyl group-containing monomer unit in the shell polymer is preferably 4% by mass or less, more preferably 3% by mass or less, still more preferably 1% by mass or less. The lower limit is 0% by mass or more. When the proportion of the carboxyl group-containing monomer unit in the shell polymer falls within these ranges above, hollow particles having more excellent dielectric properties can be obtained.

On the other hand, when the hollow particles should have a small particle size distribution (Dv/Dn) and a higher void ratio at the same time, the proportion of the carboxyl group-containing monomer unit can be 1% by mass or more, can be 2% by mass or more, or can be 3% by mass or more.

The hollow particles according to the present invention are particles each comprising a shell (outer shell) containing the resin and a hollow portion surrounded by the shell. In the present invention, the hollow portion is a hollow space clearly distinguished from the shell of the hollow particle formed from the resin. Although the hollow particles according to the present invention may have one or two or more hollow portions, to maintain a favorable balance between a high void ratio and mechanical strength, preferably, the hollow particles according to the present invention each have only one hollow portion. In the hollow particles according to the present invention, the proportion of the particle having only one hollow portion is preferably 90% by mass or more, more preferably 95% by mass or more.

In the hollow particles according to the present invention, although usually, the shell does not have communication holes and shell defects and the hollow portion is isolated by the shell from the outside of the particle, the shell may have one or two or more communication holes, and the hollow portion may be in communication with the outside of the particle through the communication hole(s). The shell of the hollow particle and a partition defining adjacent hollow portions when the particle has two or more hollow portions may be porous. In this case, the hollow portions have a size large enough to be clearly distinguished from a large number of fine spaces homogeneously dispersed inside the porous structure.

The hollow portions of the hollow particles according to the present invention may be filled with a gas such as air, or may contain a solvent. When the hollow portions of the hollow particles contain a solvent, the solvent may be a residual solvent through a solvent removal step in a method of producing hollow particles described later.

The hollow particles according to the present invention can have any shape as long as the hollow portion is formed inside the particles. The hollow particles can have any outer shape, and preferably have a spherical shape due to ease of production.

The outer shape of the hollow particles can be verified by observing the particles with an SEM or a TEM, for example. The inner shape of the hollow particles can be verified by SEM observation of cross-sections of the particles or TEM observation of the particles, for example.

The hollow particles according to the present invention may have an average circularity of 0.950 to 0.995. The hollow particles according to the present invention have high pressure resistance when they contain particles having a circularity of 0.85 or less in a small proportion. The particles having a circularity of 0.85 or less are typically particles having deformation such as depressions or crack, and may be referred to as "odd-shape particles" in the present invention in some cases. Such odd-shape particles have pressure resistance inferior to that of spherical particles because external pressure is likely to be locally applied thereto. Further, compared to the spherical particles, the odd-shape particles are more likely to aggregate when those are dispersed in a binder resin, and have inferior dispersibility. When the odd-shape particles are dispersed in a binder resin, aggregates are readily generated, and external pressure is likely to be applied to aggregates, resulting in more inferior pressure resistance. For this reason, the dispersibility and pressure resistance of the hollow particles can be improved by reducing the proportion of the odd-shape particles contained in the hollow particles.

Although the hollow particles according to the present invention may contain, as impurities, a small amount of particles having a low circularity due to crack or deformation of particles, the proportion of the particles having a circularity of 0.85 or less is preferably 10% by mass or less, more preferably 7% by mass or less, still more preferably 5% by mass or less, further still more preferably 4% by mass or less, particularly preferably 3% by mass or less in 100% by mass of the hollow particles according to the present invention.

The circularity is defined as a value obtained by dividing a diameter of a circle having the same area (circle area-equivalent diameter) as that of a projected image of a particle by a diameter of a circle having the same perimeter as that of a projected image of the particle (diameter of the circle of equal perimeter). A particle in a perfect spherical shape has a circularity of 1, and the circularity becomes smaller as the particle has a more complex surface shape.

In the present invention, the circularity is measured using a flow-type particle image analyzer at an image resolution of 0.185 µm/pixel. A flow-type particle image analyzer preferably used can be a trade name "IF-3200" available from JASCO INTERNATIONAL CO., LTD., for example. A sample to be measured is prepared, for example, by adding 0.10 to 0.12 g of hollow particles to an aqueous solution (concentration: 0.3%) of sodium linear alkylbenzene sulfonate to prepare a liquid mixture, and dispersing the liquid mixture for 5 minutes with an ultrasonic washing machine. The average circularity is the average of the circularities of 1000 to 3000 particles arbitrarily selected.

The hollow particles have a void ratio of 50% or more. When the void ratio of the hollow particles is extremely low, the hollow particles have inferior dielectric properties.

The void ratio of the hollow particles should be 50% or more. To obtain hollow particles having more excellent dielectric properties, lightweightness, heat resistance, and thermal insulating properties, the void ratio is preferably, although not particularly limited to, 50 to 90%, more preferably 55 to 85%, still more preferably 60 to 80%.

The void ratio of the hollow particles is calculated from the apparent density D₁ of the hollow particles and the true density D₀ thereof.

The apparent density D₁ of the hollow particles is measured as follows. Initially, about 30 cm³ of the hollow particles is added to a volumetric flask having a volume of 100 cm³, and the mass of the added hollow particles is precisely weighed. Next, isopropanol is added into the volumetric flask containing the hollow particles to the exact gauge line, carefully to avoid inclusion of air bubbles. The mass of isopropanol added to the volumetric flask is precisely weighed, and the apparent density D₁ (g/cm³) of the hollow particles is calculated from Expression (I) below: 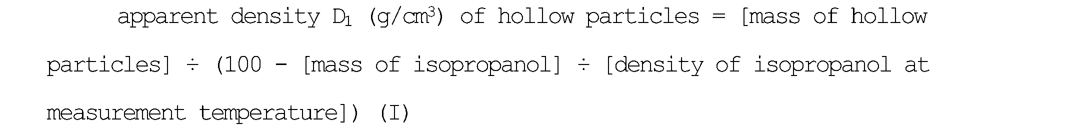 apparent density D1 (g/cm3) of hollow particles = [mass of hollow particles] ÷ (100 - [mass of isopropanol] ÷ [density of isopropanol at measurement temperature]) (I)

The apparent density D₁ corresponds to the specific gravity of the total hollow particles when the hollow portions are regarded as part of the hollow particles.

The true density D₀ of the hollow particles is measured as follows. After the hollow particles are preliminarily ground, about 10 g of the ground pieces of the hollow particles is added to a volumetric flask having a volume of 100 cm³, and the mass of the ground pieces is precisely weighed. Next, as in the measurement of the apparent density D₁ described above, isopropanol is added to the volumetric flask, the mass of isopropanol is precisely weighed, and the true density D₀ (g/cm³) of the hollow particles is calculated from Expression (II) below: 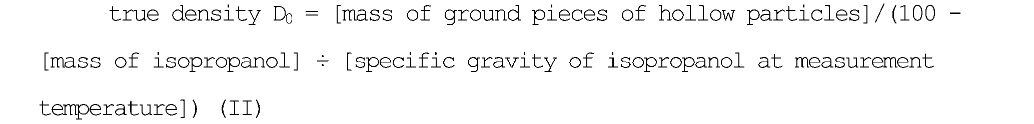 true density D0 = [mass of ground pieces of hollow particles]/(100 - [mass of isopropanol] ÷ [specific gravity of isopropanol at measurement temperature]) (II)

The true density D₀ corresponds to the specific gravity of only the shell portions of the hollow particles. As apparently from the above-mentioned measurement method, the true density D₀ is calculated where the hollow portions are not regarded as part of the hollow particles.

The void ratio (%) of the hollow particles is calculated from the apparent density D₁ of the hollow particles and the true density D₀ thereof using Expression (III) below: 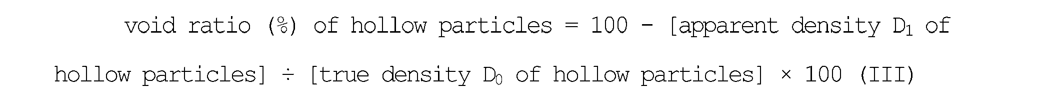 void ratio (%) of hollow particles = 100 - [apparent density D1 of hollow particles] ÷ [true density D0 of hollow particles] × 100 (III)

The void ratio of the hollow particles can be regarded as the proportion of the hollow portions in the specific gravity of the hollow particles.

When the hollow particles according to the present invention are subjected to a heat treatment in air at 130°C for 240 hours, a change rate ΔPᵣ of the peak intensity ratio Pᵣ determined by infrared spectroscopy before and after the heat treatment is 5% or less. The peak intensity ratio Pᵣ is represented by Expression (1) below: 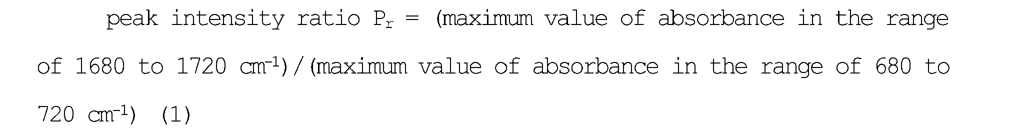 peak intensity ratio Pr = (maximum value of absorbance in the range of 1680 to 1720 cm-1)/(maximum value of absorbance in the range of 680 to 720 cm-1) (1)

In Expression (1) above, the maximum value of absorbance in the range of 1680 to 1720 cm⁻¹ is the maximum value of absorbance in the range of 1680 to 1720 cm⁻¹ when infrared spectroscopy is performed on the hollow particles, and usually is the maximum peak top intensity among the peak top intensities in the range of 1680 to 1720 cm⁻¹. The maximum value of absorbance in the range of 1680 to 1720 cm⁻¹ corresponds to the light absorbance peak derived from carbonyl groups. The maximum value of absorbance in the range of 680 to 720 cm⁻¹ is the maximum value of absorbance in the range of 680 to 720 cm⁻¹ when infrared spectroscopy is performed on the hollow particles, and usually is the maximum peak top intensity among the peak top intensities in the range of 680 to 720 cm⁻¹. The maximum value of absorbance in the range of 680 to 720 cm⁻¹ corresponds to the light absorbance peak derived from the carbon hydrogen bonds (C-H) in benzene rings.

The change rate ΔPᵣ of the peak intensity ratio Pᵣ before and after the heat treatment can be determined by measuring the infrared absorption spectrum of the hollow particles before the heat treatment and that of the hollow particles after the heat treatment (heat treatment in the air at 130°C for 240 hours), and performing calculation from Expression (2) below: 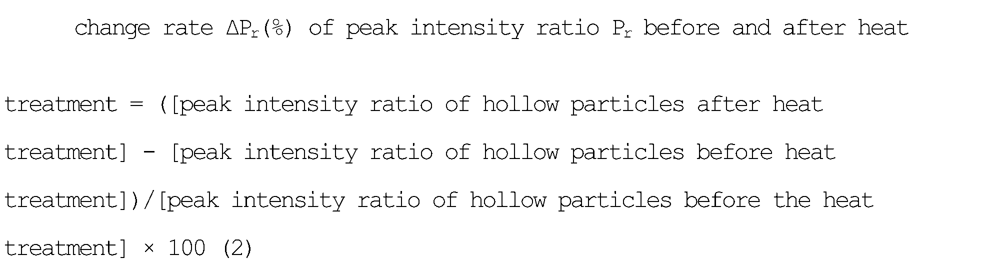 change rate ΔPr(%) of peak intensity ratio Pr before and after heat treatment = ([peak intensity ratio of hollow particles after heat treatment] - [peak intensity ratio of hollow particles before heat treatment])/[peak intensity ratio of hollow particles before the heat treatment] × 100 (2)

In the present invention, when the void ratio is controlled to 50% or more and the change rate ΔPᵣ of the peak intensity ratio Pᵣ before and after the heat treatment is controlled to 5% or less, hollow particles which have excellent dielectric properties and undergo a reduced reduction in dielectric properties under a high temperature condition can be obtained.

The change rate ΔPᵣ of the peak intensity ratio Pᵣ before and after the heat treatment on the hollow particles can be 5% or less, and is not particularly limited. The change rate ΔPᵣ is preferably 4% or less, more preferably 3% or less from the viewpoint of obtaining hollow particles which undergo a further suppressed reduction in dielectric properties under a high temperature condition. The lower limit of the change rate ΔPᵣ of the peak intensity ratio Pᵣ before and after the heat treatment is not particularly limited, and is 0.1% or more, for example.

The change rate ΔPᵣ of the peak intensity ratio Pᵣ before and after the heat treatment can be determined by measuring the hollow particles before the heat treatment and the hollow particles after the heat treatment in the air at 130°C for 240 hours by infrared spectroscopy, determining the maximum value of absorbance in the range of 1680 to 1720 cm⁻¹ and the maximum value of absorbance in the range of 680 to 720 cm⁻¹ from the results of measurements, and performing calculation based on Expressions (1) and (2) above.

The residual double bond ratio in the shell polymer forming the resin for the hollow particles is not particularly limited. To further suppress a reduction in dielectric properties under a high temperature condition and a reduction in dielectric properties due to light (such as ultraviolet light or visible light), the residual double bond ratio is preferably controlled to 15% or less. The residual double bond ratio is more preferably 10% or less, still more preferably 5% or less, further still more preferably 4.5% or less, particularly preferably 4% or less. The lower limit of the residual double bond ratio is not particularly limited, and can be 0.1% or more, for example.

The residual double bond ratio can be determined as follows.

Initially, the infrared absorption spectrum of the shell polymer contained in the hollow particles and that of the polymerizable monomer before the polymerization reaction used in preparation of the hollow particles are measured as absorbance spectra.

On the other hand, among the polymerizable monomers used in preparation of the hollow particles, the polymerizable monomer contained in the largest amount is specified as a reference monomer. If a plurality of polymerizable monomers contained in the largest amount is present, one of them is specified as a reference monomer. Based on the structure of the reference monomer, one structural unit which does not increase nor decrease before and after the polymerization reaction is selected. As the structural unit which does not increase nor decrease before and after the polymerization reaction, preferably, a structural unit showing a peak appearing in an infrared absorption spectrum which can be clearly distinguished from the peak of polymerizable unsaturated double bonds (C=C) and has high intensity is selected from the structural units contained in the reference monomer which do not contribute to the polymerization reaction. The peak derived from the structural unit selected is defined as a reference peak.

Then, in the infrared absorption spectrum of the shell polymer and that of the polymerizable monomer, a value is calculated by dividing the peak intensity of the reference peak by the proportional content of the monomer having the structural unit showing the reference peak, and the calculated value is defined as a reference peak intensity.

In the infrared absorption spectrum of the shell polymer, and that of the polymerizable monomer, the peak intensity of the peak derived from polymerizable unsaturated double bonds (C=C) is measured.

The ratio (M₁/M₀) of the peak intensity (M₁) of the peak derived from polymerizable unsaturated double bonds (C=C) to the reference peak intensity (M₀) determined from the infrared absorption spectrum of the polymerizable monomer before the polymerization reaction is defined as a peak intensity ratio where the residual double bond ratio is 100%.

The ratio (P₁/P₀) of the peak intensity (P₁) of the peak derived from polymerizable unsaturated double bonds (C=C) to the reference peak intensity (P₀) determined from the infrared absorption spectrum of the shell polymer contained in the hollow particles is determined in the same manner as above. Then, using the peak intensity ratio (M₁/M₀) determined from the infrared absorption spectrum of the polymerizable monomer and the peak intensity ratio (P₁/P₀) determined from the infrared absorption spectrum of the shell polymer, the residual double bond ratio can be calculated from Expression (IV) below: $residual double bond ratio \left(%\right) = \left\{\left({P}_{1}/{P}_{0}\right)/\left({M}_{1}/{M}_{0}\right)\right\} \times 100$ (IV)

To be noted, the peak intensity can be quantitated by placing base points outside the both ends of the peak, and determining the height from the baseline which is a straight line connecting the base points to the peak top.

For example, when the polymerizable monomers used in preparation of the hollow particles are 95% by mass of divinylbenzene and 5% by mass of ethylvinylbenzene, the reference monomer is divinylbenzene, which is contained in the largest amount. Based on the structure of divinylbenzene, for example, the C-H bonds of the benzene ring contained in divinylbenzene are selected as the structural unit which does not increase nor decrease before and after the polymerization reaction. Then, the infrared absorption spectrum of the polymerizable monomer composed of 95% by mass of divinylbenzene and 5% by mass of ethylvinylbenzene and the infrared absorption spectrum of the shell polymer contained in the hollow particles are measured. In each of the spectra, the peak derived from the C-H bonds of the benzene ring contained in divinylbenzene is specified as the reference peak. Since the peak derived from the C-H bonds of the benzene ring contained in divinylbenzene and the peak derived from the C-H bonds of the benzene ring contained in ethylvinylbenzene appear in the same position, divinylbenzene and ethylvinylbenzene correspond to the monomers containing the structure showing the reference peak. Thus, the value obtained by dividing the peak intensity of the reference peak by 1.00, which is the total of the proportional content of divinylbenzene and that of ethylvinylbenzene, is defined as the reference peak intensity. In each of the spectra, the peak intensity of the peak derived from the polymerizable unsaturated double bond (C=C) contained in divinylbenzene and that of the peak derived from the polymerizable unsaturated double bonds (C=C) contained in ethylvinylbenzene are measured. Then, using the ratio (M₁/M₀) of the peak intensity (M₁) of the peak derived from the polymerizable unsaturated double bond (C=C) to the reference peak intensity (M₀) determined from the infrared absorption spectrum of the polymerizable monomer and the ratio (P₁/P₀) of the peak intensity (P₁) of the peak derived from the polymerizable unsaturated double bond (C=C) to the reference peak intensity (P₀) determined from the infrared absorption spectrum of the shell polymer contained in the hollow particles, the residual double bond ratio is calculated from Expression (IV) above.

Alternatively, the infrared absorption spectrum can be measured by an attenuated total reflection method (ATR method), for example. Examples of infrared absorption spectrum measurement apparatuses include a product name Spectrum One available from PERKIN ELMER Inc.

Although the hollow particles can have any volume average particle size (Dv), the volume average particle size (Dv) is preferably 1 to 10 µm, more preferably 1 to 8 µm, still more preferably 1.5 to 7 µm.

Although the hollow particles can have any particle size distribution (Dv/Dn) (volume average particle size (Dv)/number average particle size (Dn)), the particle size distribution (Dv/Dn) is preferably 1.02 to 2.00, more preferably 1.04 to 1.60, still more preferably 1.06 to 1.40, further still more preferably 1.06 to 1.30, particularly preferably 1.08 to 1.25, most preferably 1.10 to 1.20. When the hollow particles have a particle size distribution (Dv/Dn) within these ranges above, for example, in pressure molding of a molding resin or the like blended with the hollow particles according to the present invention, deformation of the hollow particles can be suppressed, and a sufficient effect of adding the hollow particles (such as weight reduction) can be obtained.

The volume average particle size (Dv) and number average particle size (Dn) of the hollow particles can be determined as follows: for example, the particle sizes of the hollow particles are measured with a laser diffraction-type particle size distribution analyzer, the number average thereof and the volume average thereof are calculated, and the obtained values are defined as number average particle size (Dn) of the particles and the volume average particle size (Dv) thereof, respectively. The particle size distribution (Dv/Dn) is a value obtained by dividing the volume average particle size (Dv) by the number average particle size (Dn).

The volume average particle size (Dv) of the hollow particles and the particle size distribution (Dv/Dn) thereof can be controlled, for example, by controlling the monomer composition of the shell polymer, the type and amount of the dispersion stabilizer used in production of the hollow particles by a suspension polymerization method, and the suspension conditions.

The proportional water content of the hollow particles is not particularly limited. To use the hollow particles according to the present invention as an electronic circuit substrate material to obtain an electronic circuit substrate having high reliability, the proportional water content is preferably 2.5% by mass or less, more preferably 2.0% by mass or less, still more preferably 1.5% by mass or less. The lower limit of the proportional water content in the hollow particles is not particularly limited, and preferably, the proportional water content is as low as possible to use the hollow particles according to the present invention as an electronic circuit substrate material to obtain an electronic circuit substrate having high reliability.

Examples of applications of the hollow particles according to the present invention include additives for members used in a variety of fields such as the automobile field, the electrical field, the electronic field, and the construction, aviation, and space fields, such as electronic materials, thermal insulation materials, sound shielding materials, and light reflecting materials, containers for food products, footwears such as sport shoes and sandals, parts for home appliances, bicycle parts, stationery, tools, and the like. Among these, due to their excellent dielectric properties, the hollow particles according to the present disclosure are suitably used as an additive for implementing low transmission loss in the electrical or electronic field. For example, the hollow particles according to the present invention are suitably used as an electronic circuit substrate material, and specifically, by incorporating the hollow particles according to the present invention in an insulating resin layer of an electronic circuit substrate, transmission loss of the electronic circuit substrate can be reduced.

Besides, the hollow particles according to the present invention are also suitably used as an additive for semiconductor materials such as interlayer insulating materials, dry film resists, solder resists, bonding wires, bonding sheets, magnet wires, semiconductor encapsulating materials, epoxy encapsulating materials, mold underfills, underfills, die bond pastes, buffer coating materials, copper clad laminates, flexible substrates, high frequency device modules, antenna modules, and in-vehicle radars. Among these, the hollow particles according to the present invention are particularly suitable as an additive for semiconductor materials such as interlayer insulating materials, solder resists, bonding sheets, magnet wires, epoxy encapsulating materials, underfills, buffer coating materials, copper clad laminates, flexible substrates, high frequency device modules, antenna modules, and in-vehicle radars. The bonding sheet indicates a material for forming an insulating adhesive layer, which is used to bond a conductor layer to an organic insulating layer when a multilayer printed circuit board is produced.

The hollow particles according to the present invention, when incorporated in a molded article, demonstrate a high effect as a weight reducing material, a thermal insulation material, a soundproof material, a damping material, or a light diffusing agent. Thus, the hollow particles according to the present invention are suitable as an additive for a molded article, and can be used as an additive for a resin molded article, for example. Moreover, the hollow particles according to the present invention can also be contained as a filler in fiber-reinforced molded articles formed from a resin and reinforced fibers. When the hollow particles according to the present invention are used as a light diffusing agent, the hollow particles according to the present invention are suitable for an additive for a light diffusing material such as a light diffusing film, a light diffusing plate, or an anti-glare film.

Moreover, the hollow particles according to the present invention satisfy thermal insulating properties and buffer properties (cushioning properties) required for an undercoat material, and also satisfy heat resistance matching to applications to thermosensitive paper. The hollow particles according to the present invention are also useful as a plastic pigment having excellent gloss, covering ability, and the like.

Furthermore, because a useful ingredient such as a fragrance, a chemical, a pesticide, or an ink component can be sealed inside the hollow particles according to the present invention by a method such as immersion or depressurized or pressurized immersion, such hollow particles according to the present invention can be used in a variety of applications according to the ingredient contained inside the hollow particles.

The hollow particles according to the present invention are also suitably used as a rust inhibitor. Since the hollow particles according to the present invention are also useful as an additive for reducing electrical conductivity, for example, a coating material containing the hollow particles according to the present invention can be used as an anti-rust coating material for enhancing anticorrosive properties or rustproofness of a steel material or the like (such as an undercoat for coating or a lubricant coating material). Alternatively, an anti-rust additive can also be encapsulated in the hollow particles added to the anti-rust coating material.

### <Method of producing hollow particles>

The hollow particles according to the present invention can be produced by any method. Suitably, the hollow particles according to the present invention can be produced by a production method comprising (A) a liquid mixture preparation step, (B) a suspension step, (C) a polymerization step including a first polymerization step (C-1) and a second polymerization step (C-2), (D) a solid liquid separation step, and (E) a solvent removal step below.

Specifically, the hollow particles according to the present invention can be suitably produced by a production method comprising:
(A) a liquid mixture preparation step of preparing a liquid mixture including a first polymerizable monomer containing a cross-linkable monomer, a hydrophobic solvent, a polymerization initiator, and an aqueous medium;
(B) a suspension step of converting the liquid mixture prepared in the liquid mixture preparation step into a suspension, thereby providing a suspension in which droplets of the polymerizable monomer composition containing the first polymerizable monomer, the hydrophobic solvent, and the polymerization initiator are dispersed in the aqueous medium;
(C-1) a first polymerization step of subjecting the suspension prepared in the suspension step to a polymerization reaction and performing a first polymerization reaction, thereby preparing a first precursor composition containing first precursor particles each including a shell containing a polymer containing a monomer unit formed of the first polymerizable monomer and a hollow portion filled with the hydrophobic solvent;
(C-2) a second polymerization step of further adding a non-cross-linkable monomer as a second polymerizable monomer to the first precursor composition prepared in the first polymerization step and performing a second polymerization reaction, thereby preparing a second precursor composition containing second precursor particles each including a shell containing a polymer containing the monomer unit formed of the first polymerizable monomer and a monomer unit formed of the second polymerizable monomer and a hollow portion filled with the hydrophobic solvent;
(D) a solid liquid separation step of subjecting the second precursor composition prepared in the second polymerization step to solid liquid separation, thereby obtaining precursor particles encapsulating the hydrophobic solvent; and
(E) a solvent removal step of removing the hydrophobic solvent from the precursor particles encapsulating the hydrophobic solvent prepared in the solid liquid separation step, thereby obtaining hollow particles.

### (A) Liquid mixture preparation step

The liquid mixture preparation step is a step of preparing a liquid mixture containing a first polymerizable monomer containing a cross-linkable monomer, a hydrophobic solvent, a polymerization initiator, and an aqueous medium. The hollow particles according to the present invention are preferably produced by the production method comprising such a step.

As the first polymerizable monomer, at least the above-mentioned cross-linkable monomer can be used. Preferably, the above-mentioned cross-linkable monomer and the above-mentioned non-cross-linkable monomer are used. The monomer composition of the first polymerizable monomer can be any monomer composition as long as the monomer composition of the target shell polymer can be obtained.

The content of the first polymerizable monomer in the liquid mixture prepared in the liquid mixture preparation step is not particularly limited, and from the viewpoint of the balance among the void ratio of the hollow particles, the particle size thereof, and the mechanical strength thereof, the content is preferably 15 to 55% by mass, more preferably 25 to 50% by mass relative to 100% by mass of the total mass of the components in the liquid mixture excluding the aqueous medium.

As the hydrophobic solvent, a non-polymerizable and poorly water-soluble organic solvent is used. The hydrophobic solvent acts as a spacer material which forms a hollow portion inside the particle.

The hydrophobic solvent is not particularly limited, and a hydrocarbon solvent can be suitably used. Specific examples thereof include solvents having relatively high volatility, such as saturated hydrocarbon solvents such as butane, pentane, normal hexane, cyclohexane, heptane, and octane; aromatic hydrocarbon solvents such as benzene, toluene, and xylene; carbon disulfide, carbon tetrachloride, and the like.

For a preferred hydrophobic solvent, the proportion of a saturated hydrocarbon solvent in 100% by mass of the total amount of the hydrophobic solvent is 50% by mass or more. This causes sufficient phase separation inside droplets of the polymerizable monomer composition prepared in the suspension step described later, and thus hollow particles having only one hollow portion are readily obtained, and generation of porous particles can be suppressed. To further suppress generation of porous particles and readily obtain uniform hollow portions of the hollow particle, the proportion of the saturated hydrocarbon solvent is preferably 60% by mass or more, more preferably 80% by mass or more in 100% by mass of the total amount of the hydrophobic solvent.

Preferred hydrophobic solvents are C₅ to C₈ hydrocarbon solvents. The C₅ to C₈ hydrocarbon solvents are easily encapsulated in precursor particles during the polymerization step described later, and are easily removed from the precursor particles during the solvent removal step described later. Among these, C₆ to C₈ hydrocarbon solvents are particularly preferred.

From the viewpoint of ease in removal in the solvent removal step described later, the hydrophobic solvents are those having a boiling point of preferably 130°C or lower, more preferably 115°C or lower. On the other hand, from the viewpoint of ease in encapsulation in the precursor particles, the hydrophobic solvents are those having a boiling point of preferably 30°C or higher, more preferably 50°C or higher.

In the present invention, when the hydrophobic solvent is a mixed solvent containing a plurality of hydrophobic solvents and a plurality of boiling points is present, the boiling point of the hydrophobic solvent is defined as the boiling point of the solvent having the highest boiling point among the solvents contained in the mixed solvent, i.e., the highest boiling point of the plurality of boiling points.

Preferably, the hydrophobic solvent has a relative permittivity at 20°C of 3 or less. The relative permittivity is one of indices indicating the level of the polarity of a compound. When the hydrophobic solvent has a sufficiently low relative permittivity of 3 or less, it is considered that phase separation quickly proceeds in droplets of the polymerizable monomer composition prepared in the suspension step described later, and hollow portions are readily formed.

Examples of the hydrophobic solvent having a relative permittivity at 20°C of 3 or less include heptane (1.9), cyclohexane (2.0), benzene (2.3), toluene (2.4), and the like (the numerals in the brackets are values of the relative permittivity). For the relative permittivity at 20°C, the values according to known documents (e.g., "Kagaku Binran Kisohen", edited by Chemical Society of Japan, the 4th revised edition, Maruzen Company, Limited, published on September 30, Heisei 5, pages II-498 to II-503) and other technical information can be referred to. Examples of the method of measuring the relative permittivity at 20°C include a relative permittivity test in accordance with 23 of JIS C 2101:1999 which is performed at a measurement temperature of 20°C.

The void ratio of the hollow particles can be controlled by adjusting the amount of the hydrophobic solvent in the liquid mixture. In the polymerization step described later, the polymerization reaction proceeds in the state where the hydrophobic solvent is encapsulated in droplets of the polymerizable monomer composition. Thus, as the content of the hydrophobic solvent is larger, hollow particles having a higher void ratio are likely to be obtained.

The content of the hydrophobic solvent in the liquid mixture is preferably 50 to 500 parts by mass, more preferably 60 to 400 parts by mass, still more preferably 80 to 350 parts by mass, particularly preferably 100 to 300 parts by mass relative to 100 parts by mass of the total mass of the first polymerizable monomer.

As the polymerization initiator, an oil-soluble polymerization initiator is preferably used. By using the oil-soluble polymerization initiator as the polymerization initiator, the polymerization initiator can be suitably taken into droplets of the polymerizable monomer composition in the suspension to be prepared in the suspension step described later.

The oil-soluble polymerization initiator is not particularly limited as long as it has a solubility in water of 0.2% by mass or less and is lipophilic. Examples of the oil-soluble polymerization initiator include benzoyl peroxide, lauroyl peroxide, t-butylperoxide 2-ethylhexanoate, t-butylperoxydiethyl acetate, t-butyl peroxypivalate, 2,2'-azobis(2,4-dimethylvaleronitrile), azobisisobutyronitrile, and the like.

The content of the polymerization initiator is preferably 0.5 to 20 parts by mass, more preferably 1 to 15 parts by mass, still more preferably 2 to 12 parts by mass relative to 100 parts by mass of the total mass of the first polymerizable monomer in the liquid mixture. By controlling the content of the polymerization initiator within these ranges above, the polymerization reaction is caused to sufficiently proceed, it is less likely that the polymerization initiator may remain after the end of the polymerization reaction, and it is less likely that unexpected side reactions may proceed.

Examples of aqueous media include media selected from the group consisting of water, hydrophilic solvents, and mixtures of water and hydrophilic solvents.

The hydrophilic solvent is not particularly limited as long as it is sufficiently mixed with water and does not cause phase separation, and examples thereof include alcohols such as methanol and ethanol; tetrahydrofuran (THF); dimethyl sulfoxide (DMSO); and the like.

Among these aqueous media, use of water is preferred due to its high level of polarity. When a mixture of water and a hydrophilic solvent is used, to appropriately form droplets of the polymerizable monomer composition containing the first polymerizable monomer, the hydrophobic solvent, and the polymerization initiator, preferably, the entire mixture does not have an excessively reduced polarity. When a mixture of water and a hydrophilic solvent is used, the mixing ratio (mass ratio) of water to the hydrophilic solvent is preferably 99:1 to 50:50.

In the liquid mixture preparation step, a dispersion stabilizer is preferably used in addition to the first polymerizable monomer, the hydrophobic solvent, the polymerization initiator, and the aqueous medium. In other words, the liquid mixture preparation step is a step of preparing a liquid mixture containing the first polymerizable monomer, the hydrophobic solvent, the polymerization initiator, the aqueous medium, and the dispersion stabilizer.

The dispersion stabilizer is a compound which causes droplets of the polymerizable monomer composition to be dispersed in the aqueous medium in the suspension step described later, and may be either of an inorganic dispersion stabilizer and an organic dispersion stabilizer.

Examples of the inorganic dispersion stabilizer include colloidal silica, magnesium hydroxide, calcium phosphate, calcium carbonate, barium sulfate, calcium oxalate, calcium carbonate, magnesium carbonate, barium carbonate, tricalcium phosphate, aluminum hydroxide, magnesium hydroxide, ferric hydroxide, hydroxy apatite, silicic acid diatomite, clay, bentonite, and the like.

Examples of the organic dispersion stabilizer include methylcellulose, hydroxypropylmethylcellulose, carboxymethylcellulose, starch, and the like.

Among these, inorganic dispersion stabilizers are preferred from the viewpoint of a high dispersion stabilizing effect and ease in control of the particle size of droplets of the polymerizable monomer composition containing the first polymerizable monomer, the hydrophobic solvent, and the polymerization initiator. Among these inorganic dispersion stabilizers, preferred are metal-containing dispersion stabilizers, and more preferred are poorly water-soluble inorganic metal salts. The poorly water-soluble inorganic metal salts are preferably inorganic metal salts having a solubility in 100 g of water of 0.5 g or less, and examples thereof include magnesium hydroxide, calcium hydroxide, barium hydroxide, calcium phosphate, and the like. Among these, more preferred is magnesium hydroxide. These dispersion stabilizers can be used alone or in combination.

To further enhance the dispersion stabilizing effect, the dispersion stabilizer is preferably used in the form of a dispersion or solution of the dispersion stabilizer by dispersing or dissolving the dispersion stabilizer in the aqueous medium. In other words, in the liquid mixture preparation step, a liquid mixture is preferably obtained by mixing a dispersion stabilizer in the form of a dispersion or solution thereof with the first polymerizable monomer, the hydrophobic solvent, and the polymerization initiator. As the aqueous medium, those listed above can be used.

For the mixing ratio of the dispersion stabilizer to the aqueous medium in the dispersion or solution of the dispersion stabilizer, the mass ratio of the dispersion stabilizer to the aqueous medium is preferably 0.7:100 to 7:100, more preferably 1.0:100 to 5:100, still more preferably 1.4:100 to 4:100. When the mixing ratio of the dispersion stabilizer to the aqueous medium falls within these ranges above, the dispersion stabilizing effect can be more appropriately enhanced.

As the method of preparing a dispersion or solution of the dispersion stabilizer, a method of directly mixing the dispersion stabilizer with the aqueous medium may be used. Preferred is a method of reacting two or more compounds as precursors of the dispersion stabilizer (i.e., two or more precursor compounds) by mixing these in the aqueous medium, thereby generating the dispersion stabilizer.

When the two or more precursor compounds are mixed in the aqueous medium, any precursor compound can be used without limitation. For example, when a poorly water-soluble hydroxide salt such as magnesium hydroxide, calcium hydroxide, or barium hydroxide is used as the dispersion stabilizer, examples of the two or more precursor compounds include a combination of a water-soluble polyvalent metal salt and an alkali metal hydroxide, and the like.

Examples of the water-soluble polyvalent metal salt include hydrochloric acid salts, sulfuric acid salts, nitric acid salts, and acetic acid salts of polyvalent metals such as magnesium, calcium, aluminum, iron, copper, manganese, nickel, and tin, and the like. Among these, preferred are water-soluble salts of magnesium and calcium. Examples of alkali metal hydroxides include sodium hydroxide, potassium hydroxide, lithium hydroxide, and the like. For example, when magnesium hydroxide is used as the dispersion stabilizer, the two or more precursor compounds are suitably a combination of magnesium chloride and sodium hydroxide.

The two or more precursor compounds can be mixed in the aqueous medium by any method. When the two or more precursor compounds are a combination of a water-soluble polyvalent metal salt and an alkali metal hydroxide, a method of adding an aqueous medium solution of the alkali metal hydroxide dropwise to an aqueous medium solution of the water-soluble polyvalent metal salt under stirring is suitable.

The content of the water-soluble polyvalent metal salt in the aqueous medium solution of the water-soluble polyvalent metal salt is preferably 2 to 15 parts by weight, more preferably 3 to 12 parts by weight relative to 100 parts by weight of the aqueous medium solution. The content of the alkali metal hydroxide in the aqueous medium solution of the alkali metal hydroxide is preferably 6 to 30 parts by weight, more preferably 8 to 25 parts by weight relative to 100 parts by weight of the aqueous medium solution. The aqueous medium to be used can be those listed above.

In the liquid mixture preparation step, the liquid mixture can be obtained by mixing the above-mentioned components by stirring or the like. At this time, other materials may be optionally mixed in addition to the above-mentioned components. In the liquid mixture preparation step, a liquid mixture is prepared, in which an oil phase containing lipophilic materials such as the first polymerizable monomer, the hydrophobic solvent, and the polymerization initiator is dispersed into a particle size of about several micrometers in an aqueous phase containing the aqueous medium and the dispersion stabilizer optionally used. The dispersion state of these components in the liquid mixture can also be observed by the naked eye depending on the types of the components.

In the liquid mixture preparation step, to readily obtain a homogenous composition of the shell portion, a liquid mixture is preferably prepared by preliminarily preparing an oil phase containing the polymerizable monomer, the hydrophobic solvent, and the polymerization initiator, and mixing the oil phase with a dispersion or solution prepared by dispersing or dissolving the dispersion stabilizer in the aqueous medium.

### (B) Suspension step

The suspension step is a step of converting the liquid mixture prepared in the above-mentioned liquid mixture preparation step into a suspension, thereby providing a suspension in which droplets of the polymerizable monomer composition containing the first polymerizable monomer, the hydrophobic solvent, and the polymerization initiator are dispersed in the aqueous medium.

The suspension method for forming droplets of the polymerizable monomer composition is not particularly limited. Preferred is a method of stirring the liquid mixture prepared in the above-mentioned liquid mixture preparation step using a stirring apparatus enabling strong stirring. The stirring apparatus used in the suspension step is not particularly limited, and for example, a stirring apparatus including a stirrer having a stirring blade or a rotor and a feeding tank for feeding to the stirrer can be used. The stirrer can be any stirrer as long as it has a stirring blade or a rotor, and is not particularly limited. To effectively form a suspension, suitable is a stirrer having a combination of a rotor as a concentric ring with comb teeth and a stator, in which the rotor is rotated at a high speed to flow the dispersion from the inside of the rotor to the outside of the stator, and the dispersion is stirred in gaps between the rotor and the stator.

Examples of the stirrer having such a configuration include in-line type emulsion dispersing machines, and examples of the in-line type emulsion dispersing machines include a product name "CAVITRON" (available from Eurotec, Ltd.), a product name "MILDER" (available from Pacific Machinery & Engineering Co., Ltd.), a product name "EBARA MILDER" (available from EBARA CORPORATION), a product name "TK PIPELINE-HOMO MIXER" (available from Tokushu Kika Kogyo Co., Ltd.), a product name "Colloid Mill" (available from Shinko Pantec Co., Ltd.), a product name "SLASHER" (available from NIPPON COKE & ENGINEERING CO., LTD.), a product name "Trigonal wet grinder" (available from Mitsui Miike Kakoki K.K.), a product name "Fine Flow Mill" (available from Pacific Machinery & Engineering Co., Ltd.), and the like.

In the suspension step in the production method according to the present invention, a suspension in which droplets of the polymerizable monomer composition containing the above-mentioned lipophilic materials are homogeneously dispersed in the aqueous medium can be obtained. Such droplets of the polymerizable monomer composition are difficult to observe with the naked eye, and can be observed with a known observation apparatus such as an optical microscope, for example. In the suspension step, phase separation occurs in the droplets of the polymerizable monomer composition, and thus a hydrophobic solvent having a low polarity is likely to concentrate in the insides of the droplets. As a result, in the obtained droplets, the hydrophobic solvent is found in the inside of each droplet, and the materials other than the hydrophobic solvent are found in the periphery thereof.

### (C-1) First polymerization step

The first polymerization step is a step of subjecting the suspension prepared in the above-mentioned suspension step to a polymerization reaction and performing a first polymerization reaction, thereby preparing a first precursor composition containing first precursor particles each including a shell containing a polymer containing a monomer unit formed of the first polymerizable monomer and a hollow portion filled with the hydrophobic solvent.

In the first polymerization step, the droplets of the polymerizable monomer composition are subjected to a polymerization reaction in a state where the hydrophobic solvent is encapsulated in the droplets. Thereby, the polymerization reaction is likely to proceed while the droplets maintain their shape, and the size and void ratio of the precursor particles are readily controlled. Since the polymerizable monomer is used in combination with the hydrophobic solvent, the hydrophobic solvent has a low polarity compared to the shell of the precursor particles, and thus is less compatible with the shell. Thus, phase separation sufficiently occurs, which is likely to result in formation of only one hollow portion. By adjusting the amount of the hydrophobic solvent, the void ratio of the precursor particles can be easily controlled.

In the first polymerization reaction, the polymerization method is not particularly limited, and for example, a batch-wise (batch) method, a semi-continuous method, a continuous method, or the like can be used. Preferred is a batch-wise (batch) method. In the first polymerization reaction, the polymerization temperature is preferably 40 to 100°C, more preferably 60 to 90°C. In the first polymerization reaction, the heating rate when the temperature is raised to the polymerization temperature is preferably 10°C/h to 60°C/h, more preferably 15°C/h to 55°C/h.

The polymerization time in the first polymerization reaction is preferably 0.1 to 4 hours, more preferably 0.25 to 3 hours, more preferably 0.5 to 2 hours. The polymerization time in the first polymerization reaction is a time period after the temperature reaches the polymerization temperature and until a second polymerizable monomer described later is added to start the second polymerization step.

### (C-2) Second polymerization step

The second polymerization step is a step of further adding a non-cross-linkable monomer as a second polymerizable monomer to the first precursor composition prepared in the first polymerization step and performing a second polymerization reaction, thereby preparing a second precursor composition containing second precursor particles each including a shell containing a polymer containing the monomer unit formed of the first polymerizable monomer and a monomer unit formed of the second polymerizable monomer and a hollow portion filled with the hydrophobic solvent.

In other words, in the production method according to the present invention, in the first polymerization step, a polymerization reaction is performed for the above-mentioned predetermined time, and thereafter, a non-cross-linkable monomer as a second polymerizable monomer is added, and an additional polymerization reaction is continued, thereby preparing a second precursor composition containing second precursor particles. Specifically, a non-cross-linkable monomer as a second polymerizable monomer is added to the first precursor composition containing first precursor particles formed by performing the polymerization reaction in the first polymerization step for preferably 0.1 to 4 hours, more preferably 0.25 to 3 hours, still more preferably 0.5 to 2 hours, and the polymerization reaction is further continued, thereby preparing a second precursor composition containing second precursor particles. The non-cross-linkable monomer as a second polymerizable monomer is added preferably at a timing in which the polymerization conversion ratio in the first polymerization reaction reaches 10 to 80%, more preferably at a timing in which the polymerization conversion ratio in the first polymerization reaction reaches 15 to 70%, still more preferably at a timing in which the polymerization conversion ratio in the first polymerization reaction reaches 20 to 60%, particularly preferably at a timing in which the polymerization conversion ratio in the first polymerization reaction reaches 30 to 55%.

The amount of the second polymerizable monomer to be added is preferably 1 to 85 parts by mass, more preferably 5 to 82 parts, still more preferably 15 to 80 parts by mass, further still more preferably 17.5 to 70 parts by mass, particularly preferably 20 to 65 parts by mass relative to 100 parts by mass of the first polymerizable monomer.

In the second polymerization step, by selecting the timing of the addition of the second polymerizable monomer and the start of the second polymerization step as above, the polymerization reaction is allowed to proceed in a state where the second polymerizable monomer is taken into the shells of the first precursor particles. In particular, in the second polymerization step, by adding the second polymerizable monomer at a stage where the polymerization reaction of the first polymerizable monomer is proceeding, that is, in a state where the shells of the first precursor particles formed by polymerizing the first polymerizable monomer are relatively flexible, the second polymerizable monomer can be taken into the shells, and can be reacted with part of the cross-linkable monomer contained in the first polymerizable monomer (e.g., polymerizable functional groups not involved in cross-linking among the polymerizable functional groups contained in the cross-linkable monomer) in the insides and surfaces of the shells.

In addition, by selecting the timing of the addition of the second polymerizable monomer and the start of the second polymerization step as above and selecting the amount of the second polymerizable monomer to be added as above, the change rate ΔPᵣ of the peak intensity ratio Pᵣ before and after the heat treatment of the hollow particles can be controlled, and thus, the change rate ΔPᵣ of the peak intensity ratio Pᵣ before and after the heat treatment of the hollow particles can be suitably controlled within the ranges specified above.

As the second polymerizable monomer, the above-mentioned non-cross-linkable monomers are preferably used, the above-mentioned non-cross-linkable hydrocarbon monomers are more preferably used, styrene and ethylvinylbenzene are still more preferably used, and styrene is particularly preferably used.

The method of adding the second polymerizable monomer is not particularly limited, and any one of addition in one portion, portion-wise addition, continuous addition, and the like can be used. Preferred is addition in one portion.

In the second polymerization reaction performed after the addition of the second polymerizable monomer, the polymerization method is not particularly limited, and for example, the same polymerization method as that used in the first polymerization reaction can be used. The polymerization temperature in the second polymerization reaction is desirably the same temperature as that in the first polymerization reaction, and is preferably 40 to 100°C, more preferably 60 to 90°C. The reaction time in the second polymerization reaction is preferably 1 hour or more, more preferably 2 hours or more, particularly preferably 4 hours or more. The upper limit of the reaction time in the second polymerization reaction can be selected according to the total reaction time of the polymerization reaction over the entire polymerization step, and is not particularly limited. For example, the upper limit thereof can be within 24 hours.

The production method according to the present invention can comprise a step including a third polymerization step (C-3) in addition to the first polymerization step (C-1) and the second polymerization step (C-2).

### (C-3) Third polymerization step

The third polymerization step is a step of further adding a functional group-containing polymerizable monomer as a third polymerizable monomer after the second polymerization step and performing a third polymerization reaction.

In the third polymerization step, it is desirable that the third polymerizable monomer is added in a state where the first polymerization reaction and the second polymerization reaction have sufficiently proceeded and a covalent bond network is densely formed in the shells of the second precursor particles. Thereby, a desired functional group can be introduced to the shell surfaces of the second precursor particles, thereby enhancing compatibility with a molding resin when the hollow particles according to the present invention are blended with the resin and the like.

As the third polymerizable monomer, a functional group-containing polymerizable monomer is preferably used. The functional group-containing polymerizable monomer is a monomer having a polymerizable functional group and a functional group in addition to the functional group to be involved in polymerization. As the functional group-containing polymerizable monomer, the above-mentioned cross-linkable hydrocarbon monomers, heteroatom-containing cross-linkable monomers, and heteroatom-containing non-cross-linkable monomers, and the like can be used.

As the cross-linkable hydrocarbon monomer, divinylbenzene is preferred.

As the heteroatom-containing cross-linkable monomer, preferred are protected carboxyl group-containing monomers, more preferred are allyl (meth)acrylate and ethylene glycol di(meth)acrylate, and still more preferred are allyl methacrylate and ethylene glycol dimethacrylate.

The protected carboxyl group contained in the protected carboxyl group-containing monomer is preferably a group which is to be deprotected by hydrolysis under an acidic condition or a basic condition to give a carboxyl group.

As the heteroatom-containing non-cross-linkable monomer, preferred are amino group-containing monovinyl monomers and protected carboxyl group-containing monomers.

Examples of amino group-containing monovinyl monomer include dimethylaminoethyl (meth)acrylate, diethylaminoethyl (meth)acrylate, t-butylaminoethyl (meth)acrylate, and 4-vinylbenzylamine.

Examples of protected carboxyl group-containing monomers include methyl (meth)acrylate, ethyl (meth)acrylate, and t-butyl (meth)acrylate.

Among these, more preferred are amino group-containing monovinyl monomers, still more preferred are t-butylaminoethyl (meth)acrylate and 4-vinylbenzylamine, and particularly preferred is t-butylaminoethyl (meth)acrylate from the viewpoint of improving the adhesion of the hollow particles with the resin.

The protected carboxyl group contained in the protected carboxyl group-containing monomer is preferably a group which is to be deprotected by hydrolysis under an acidic condition or a basic condition to give a carboxyl group.

The amount of the third polymerizable monomer to be added is preferably 1 to 20 parts by mass, more preferably 2 to 20 parts by mass, still more preferably 3 to 15 parts by mass, particularly preferably 4 to 10 parts by mass relative to 100 parts by mass of the first polymerizable monomer.

To enhance compatibility of the hollow particles with a molding resin and the like when the hollow particles are blended with the resin and the like, the timing of adding the third polymerizable monomer is a time period of preferably 1 to 12 hours, more preferably 1 to 10 hours, still more preferably 2 to 10 hours, particularly preferably 4 to 8 hours from the start of the second polymerization reaction.

To enhance compatibility of the hollow particles with a molding resin and the like when the hollow particles are blended with the resin and the like, the timing of adding the third polymerizable monomer can be selected according to the polymerization conversion ratio in the second polymerization reaction, and is a timing at which the polymerization conversion ratio in the second polymerization reaction reaches preferably 20 to 99%, more preferably 30 to 99%, still more preferably 40 to 99%, further still more preferably 60 to 99%, particularly preferably 80 to 99%, most preferably 90 to 99%.

The method of adding the third polymerizable monomer is not particularly limited, and any one of addition in one portion, portion-wise addition, continuous addition, and the like can be used. Preferred is addition in one portion.

In the third polymerization reaction performed after the addition of the third polymerizable monomer, the polymerization method is not particularly limited, and for example, the same polymerization method as that used in the first polymerization reaction and the second polymerization reaction can be used. In the third polymerization reaction, the polymerization temperature can be the same polymerization temperature as those in the first polymerization reaction and the second polymerization reaction, and is preferably 40 to 100°C, more preferably 60 to 90°C. The reaction time of the third polymerization reaction is preferably 1 hour or more, more preferably 2 hours or more, still more preferably 5 hours or more, further still more preferably 10 hours or more, particularly preferably 15 hours or more. The upper limit of the reaction time in the third polymerization reaction can be selected according to the total reaction time in the entire polymerization step, and is not particularly limited. For example, the upper limit thereof can be within 24 hours.

Through the first polymerization step, the second polymerization step, and the third polymerization step optionally used, a second precursor composition is obtained, in which the second precursor particles encapsulating the hydrophobic solvent are dispersed in the aqueous phase containing an aqueous medium as the main component.

### (D) Solid liquid separation step

The solid liquid separation step is a step of separating solids from the second precursor composition obtained through the first polymerization step and the second polymerization step (when the third polymerization reaction is preformed, the second precursor composition obtained through the third polymerization step), thereby obtaining precursor particles encapsulating the hydrophobic solvent.

The method of subjecting the precursor composition to solid liquid separation is not particularly limited, and a known method can be used. Examples of methods for solid liquid separation include centrifugation, filtration, static separation, and the like. Among these, centrifugation or filtration can be used, and centrifugation may be used because the operation is simple.

An optional step such as a preparative drying step may be performed after the solid liquid separation step and before execution of a solvent removal step described later. Examples of the preparative drying step include a step of preparatively drying the solids obtained after the solid liquid separation step with a drying apparatus such as a dryer or a drying machine such as a hand dryer.

### (E) Solvent removal step

The solvent removal step is a step of removing the hydrophobic solvent from the precursor particles encapsulating the hydrophobic solvent, which are obtained through the solid liquid separation step.

By removing the hydrophobic solvent encapsulated in the precursor particles in gas, the hydrophobic solvent inside the precursor particles is replaced by air, and hollow particles filled with a gas are obtained.

The term "in gas" in the solvent removal step strictly means an environment under which any liquid is not present outside the precursor particles, and an environment under which only a trace of liquid not affecting the removal of the hydrophobic solvent is present outside the precursor particles. The term "in gas" is exchangeable with a state where the precursor particles are not present in the slurry, or is exchangeable with a state where the precursor particles are present in a dry powder. In other words, in the solvent removal step, it is desirable that the hydrophobic solvent is removed under an environment where the precursor particles are in direct contact with an external gas.

The method of removing the hydrophobic solvent from the precursor particles in gas is not particularly limited, and a known method can be used. Examples thereof include depressurized drying, drying with heating, and pneumatic conveying drying. These methods can be used in combination. In particular, when drying with heating is used, the heating temperature needs to be selected at a temperature equal to or higher than the boiling point of the hydrophobic solvent and equal to or lower than the highest temperature at which the shell structure of the precursor particles does not collapse. Accordingly, although the lower and upper limits of the heating temperature depend on the composition of the shell of the precursor particle and the type of the hydrophobic solvent, the lower limit of the heating temperature is preferably 50°C or higher, more preferably 70°C or higher, still more preferably 100°C or higher, and the upper limit of the heating temperature is preferably 350°C or lower, more preferably 300°C or lower, still more preferably 200°C or lower. The heating time is preferably 1 to 24 hours, more preferably 2 to 12 hours, still more preferably 3 to 8 hours.

In drying with heating, a heat treatment is also preferably performed at a temperature of 250°C or higher for 3 hours or more. By performing a heat treatment at a temperature of 250°C or higher for 3 hours or more, the double bond rate of the hollow particles to be obtained can be reduced, and the change rate ΔPᵣ of the peak intensity ratio Pᵣ before and after the heat treatment of the hollow particles can be more appropriately controlled. Thereby, hollow particles having more excellent dielectric properties can be obtained, and a reduction in dielectric properties under a high temperature condition can be further suppressed. In this case, the heating temperature is preferably 250 to 350°C, more preferably 270 to 330°C. The heating time is preferably 3 to 24 hours, more preferably 3 to 12 hours.

By the drying operation in gas, the hydrophobic solvent inside the precursor particles is replaced by an external gas, and as a result, hollow particles having hollow portions filled with the gas are obtained.

The drying atmosphere is not particularly limited, and can be appropriately selected according to the application of the hollow particles. Examples of possible drying atmospheres include air, oxygen, nitrogen, argon, and the like. By filling the insides of the hollow particles with gas, followed by depressurized drying, hollow particles whose insides are temporarily in vacuum are obtained.

As an alternative method, instead of performing solid liquid separation on the precursor composition in the form of a slurry obtained in the polymerization step, the hydrophobic solvent may be removed by replacing the hydrophobic solvent encapsulated in the precursor particles by the aqueous medium in the slurry containing the precursor particles and the aqueous medium. In this method, by removing the hydrophobic solvent encapsulated in the precursor particles in the precursor composition by bubbling an inert gas into the precursor composition at a temperature equal to or higher than the temperature obtained by subtracting 35°C from the boiling point of the hydrophobic solvent, the amount of residual hydrophobic solvent in the hollow particles can be reduced. Here, when the hydrophobic solvent is a mixed solvent containing a plurality of hydrophobic solvents and a plurality of boiling points is present, the boiling point of the hydrophobic solvent in the solvent removal step is defined as the boiling point of the solvent having the highest boiling point among the solvents contained in the mixed solvent, i.e., the highest boiling point of the plurality of boiling points.

To reduce the amount of residual hydrophobic solvent in the hollow particles, the temperature during bubbling of the inert gas into the precursor composition is preferably a temperature equal to or higher than the temperature obtained by subtracting 30°C from the boiling point of the hydrophobic solvent, more preferably a temperature equal to or higher than the temperature obtained by subtracting 20°C therefrom. The temperature during bubbling is usually a temperature equal to or higher than the polymerization temperature in the polymerization step. The temperature during bubbling may be 50°C or higher and 100°C or lower, although not particularly limited. Examples of the inert gas for bubbling include, but should not be limited to, nitrogen, argon, and the like.

The bubbling conditions are appropriately adjusted according to the type and amount of the hydrophobic solvent to remove the hydrophobic solvent encapsulated in the precursor particles, and is not particularly limited. For example, a method of bubbling the inert gas at 1 to 3 L/min for 1 to 10 hours is preferred. By this method, an aqueous slurry containing precursor particles encapsulating the aqueous medium is obtained. This slurry is subjected to solid liquid separation to obtain hollow particles, and the hollow particles are dried to remove the aqueous medium inside the hollow particles. Thereby, hollow particles having a hollow portion filled with a gas are obtained.

When the method of performing solid liquid separation on a precursor composition in the form of a slurry and removing the hydrophobic solvent in the precursor particles in gas, thereby obtaining hollow particles having a hollow portion filled with the gas is compared to the method of replacing the hydrophobic solvent encapsulated in the precursor particles by the aqueous medium in a slurry containing precursor particles and the aqueous medium, performing solid liquid separation, removing the aqueous medium in the precursor particles in gas, thereby obtaining hollow particles having a hollow portion with the gas, the former method has an advantage that the hollow particles are less likely to crush in the step of removing the hydrophobic solvent, while the latter method has an advantage that the amount of residual hydrophobic solvent is reduced by bubbling using an inert gas.

Besides, the following methods may be used as a method of removing the hydrophobic solvent encapsulated in the precursor particles after the polymerization step and before the solid liquid separation step without performing solid liquid separation on the precursor composition in the form of a slurry obtained in the polymerization step: for example, a method of distilling off the hydrophobic solvent encapsulated in the precursor particles from the precursor composition by evaporation under predetermined pressure (under high pressure, normal pressure, or reduced pressure); a method of introducing an inert gas such as nitrogen, argon, or helium or water vapor into the precursor composition, followed by distilling off by evaporation under predetermined pressure (under high pressure, normal pressure, or reduced pressure).

### (F) Other steps

The production method may comprise other steps. Examples of the other steps include (F-1) a washing step and/or (F-2) another hollow portion replacement step.

### (F-1) Washing step

The production method preferably comprises a washing step before or after the solid liquid separation step. For example, when the dispersion stabilizer is used, preferably, the production method comprises a washing step before the recovery step, the washing step being a step of performing washing by adding an acid or an alkali to remove residual dispersion stabilizer in the hollow particle slurry containing the hollow particles and the aqueous medium. When the dispersion stabilizer used is a dispersion stabilizer soluble to an acid, preferably, the acid is added to the precursor composition containing the precursor particles, and washing is performed. In contrast, when the dispersion stabilizer used is a dispersion stabilizer soluble to an alkali, preferably, the alkali is added to the precursor composition containing the precursor particles, and washing is performed.

When the dispersion stabilizer soluble to an acid is used as the dispersion stabilizer, it is preferred that the acid be added to the precursor composition containing the precursor particles, and the pH be adjusted to preferably 6.5 or less, more preferably 6 or less. As the acid to be added, an inorganic acid such as sulfuric acid, hydrochloric acid, or nitric acid or an organic acid such as formic acid or acetic acid can be used. In particular, sulfuric acid is suitable because of its large efficiency in removal of the dispersion stabilizer and a small load over the production facility.

### (F-2) Another hollow portion replacement step

The another hollow portion replacement step is a step of replacing a gas or a liquid inside the hollow particles by another gas or liquid. By such a replacement, the environment inside the hollow particles can be changed, a molecule can be selectively sealed inside the hollow particles, or the chemical structure inside the hollow particles can be modified according to the application.

### <Resin composition>

The hollow particles according to the present invention can be mixed with a resin, thereby preparing a resin composition.

The resin composition may be a liquid resin composition, or may be a resin molded article. Examples of liquid resin compositions include those containing a liquid matrix resin before a curing reaction, those containing the components dissolved or dispersed in a solvent, and resin compositions which each contain a thermoplastic resin as a matrix resin and are in a liquid state as a result of melting of the resin. Examples of resin molded articles include molded articles formed of the above-mentioned liquid resin compositions by known methods.

The matrix resin contained in the resin composition is not particularly limited, and can be a thermosetting resin or a thermoplastic resin, for example. The resin contained in the resin composition may be an unreacted monomer, may be a prepolymer or a macromonomer, may be a polymer, or a precursor of a curable resin, such as a polyamic acid. The matrix resin contained in the resin composition can contain a thermoplastic elastomer as the resin. Further, the resin composition may contain rubber.

The thermosetting resin to be used can be known thermosetting resins, and is not particularly limited. Examples thereof include phenol resins, melamine resins, urea resins, unsaturated polyester resins, epoxy resins, polyurethane resins, silicon resins, alkyd resins, thermally curable modified polyphenylene ether resins, thermally curable polyimide resins, benzoxazine resins, urea resins, allyl resins, aniline resins, maleimide resins, bismaleimide triazine resins, liquid crystalline polyester resins, vinyl ester resins, unsaturated polyester resins, cyanate ester resins, polyether imide resins, and the like. These thermosetting resins can be used alone or in combination.

The thermoplastic resin to be used can be known thermoplastic resins, and is not particularly limited. Examples thereof include polyolefins such as polypropylene and polyethylene; polyamides such as PA6, PA66, and PA12; polyimide, polyamidimide, polyether imide, polyether ketone ketone, polyvinyl chloride, polystyrene, poly(meth)acrylate, polycarbonate, polyvinylidene fluoride, acrylonitrile-butadiene-styrene copolymers (ABSs), acrylonitrile-styrene copolymers (ASs), polyphenylene ether, polyphenylene sulfide, polyester, polytetrafluoroethylene, thermoplastic elastomers, and the like. These thermoplastic resins can be used alone or in combination.

Among these resins, insulative resins such as epoxy resins, thermally curable modified polyphenylene ether resins, thermally curable polyimide resins, silicon resins, benzoxazine resins, melamine resins, urea resins, allyl resins, phenol resins, unsaturated polyester resins, polyurethane resins, and aniline resins are preferably used in applications where a reduction in dielectric constant or a reduction in dielectric loss tangent is required. Among these, epoxy resins, thermally curable polyimide resins, modified polyphenylene ether resins, silicon resins, benzoxazine resins, melamine resins, and the like are preferably used. These insulative resins can be used alone or in combination.

As the thermoplastic elastomer, thermoplastic elastic polymers traditionally used as molding resins can be used, and examples thereof include urethane elastomers, styrene elastomers, olefin elastomers, amide elastomers, ester elastomers, and the like. The thermoplastic elastomer generally indicates an elastomer which has rubber elasticity at normal temperature (25°C) and can be plasticized and molded at a high temperature. These thermoplastic elastomers may be used alone or in combination.

The rubber may be a rubber containing natural rubber (NR), isoprene rubber (IR), butadiene rubber (BR), styrene-butadiene copolymer rubber (SBR), acrylonitrile-butadiene copolymer rubber (NBR), ethylenepropylene-diene terpolymer (EPDM), fluorocarbon rubber, or the like. These rubbers may be used alone or in combination.

The content of the resin in 100% by mass of the total solids content in the resin composition is not particularly limited, and is preferably 50 to 95% by mass or less. When the content of the resin is equal to or higher than the lower limit, molding properties in production of resin molded articles are excellent, and resin molded articles having high mechanical strength are obtained. On the other hand, when the content of the resin is equal to or lower than the upper limit, the hollow particles according to the present invention can be sufficiently contained, and thus, the effect of reducing the dielectric loss tangent or the like can be sufficiently demonstrated by the hollow particles according to the present invention.

The resin composition may further contain an additive such as a curing agent for causing a curing reaction to proceed, a curing catalyst, or an initiator according to the type of the resin. Examples of the curing agent include amines, acid anhydrides, imidazoles, thiols, phenols, naphthols, benzoxazines, cyanate esters, carbodiimides, and the like. The content of the curing agent is not particularly limited, and can be 5 to 120 parts by mass relative to 100 parts by mass of the resin, for example.

In 100% by mass of the total solids content in the resin composition, the content of the hollow particles according to the present invention is not particularly limited, and is preferably 5 to 50% by mass. When the content of the hollow particles is equal to or higher than the lower limit, the effect of reducing the dielectric loss tangent or the like can be sufficiently demonstrated by the hollow particles according to the present invention. On the other hand, when the content of the hollow particles is equal to or lower than the upper limit, the resin can be sufficiently contained, and thus molding properties and mechanical strength can be improved.

The resin composition may further contain additives such as a compatibilizer, an ultraviolet absorbing agent, a colorant, a heat stabilizer, and a filler, and a solvent or the like as needed in the range not impairing the effects of the present disclosure. The resin composition may further contain organic or inorganic fibers such as carbon fibers, glass fibers, aramid fibers, or polyethylene fibers.

The resin composition can be prepared, for example, by mixing the hollow particles according to the present invention and the resin with the additives, the solvent, and the like optionally added. When the resin in the resin composition is a thermoplastic resin, the mixing may be performed by adding the hollow particles according to the present invention and the additives optionally used to a melted thermoplastic resin, and melt kneading these. The resin composition thus prepared may be a liquid resin composition, or may be a resin molded article obtained by forming the liquid resin composition into a molded article by a known method.

The resin molded article can be produced by any production method without limitation. For example, the resin molded article can be obtained by applying a liquid resin composition onto a support, the liquid resin composition being prepared by adding the hollow particles and the like to a liquid matrix resin before a curing reaction or by dissolving or dispersing the components in a solvent, and optionally drying and curing the liquid resin composition.

Examples of a material for the support include resins such as polyethylene terephthalate and polyethylene naphthalate; metals such as copper, aluminum, nickel, chromium, gold, and silver; and the like. These supports may have a surface coated with a mold release agent.

As the method of applying the liquid resin composition, a known method can be used, and examples thereof include dip coating, roll coating, curtain coating, die coating, slit coating, gravure coating, and the like.

The resin molded article can also be obtained by impregnating a base material with the liquid resin composition, optionally drying the composition, and curing the composition. Examples of the base material include inorganic fibers such as carbon fibers, glass fibers, metal fibers, and ceramic fibers; organic synthetic fibers such as polyamide fibers, polyester fibers, polyolefin fibers, and Novoloid fibers; and the like. Among these, glass fibers (glass cloth) are preferred. The base material can be in any form, and a textile, a non-woven fabric, or the like can be used.

When the liquid resin composition contains a solvent, the resin composition is preferably dried after the application or impregnation. The drying temperature is preferably around a temperature at which the matrix resin is not cured, and is usually 20°C or higher and 200°C or lower, preferably 30°C or higher and 150°C or lower. The drying time is usually 30 seconds or more and 1 hour or less, preferably 1 minute or more and 30 minutes or less.

The curing reaction of the resin composition is performed by a method according to the type of the resin, and the method is not particularly limited. When a resin curable by heating is contained, the heating temperature for the curing reaction is appropriately adjusted according to the type of the resin, and is not particularly limited. The heating temperature is usually 30°C or higher and 400°C or lower, preferably 70°C or higher and 300°C or lower, more preferably 100°C or higher and 200°C or lower. The curing time is 5 minutes or more and 5 hours or less, preferably 30 minutes or more and 3 hours or less. The heating method is not particularly limited, and may be performed using an electric oven, for example.

The liquid resin before the curing reaction and the resin dissolved or dispersed in the solvent may be a thermosetting resin, or may be a thermoplastic resin.

Alternatively, the resin molded article may be obtained by molding a liquid resin composition which contains a melted thermoplastic resin as the resin into a desired shape by a known molding method such as extrusion molding, injection molding, press molding, or compression molding.

The resin molded article can have any shape, and the shape can be selected from a variety of shapes into which the resin composition can be molded. For example, the resin molded article can have any shape such as sheet-like shapes, film-like shapes, plate-like shapes, tubular shapes, and other various steric shapes. When the resin molded article contains fibers, the fibers contained in the resin molded article may be in the state of a non-woven fabric. When the resin molded article contains fibers, it may be a molded article of a resin composition in which the hollow particles according to the present disclosure are incorporated in a fiber-reinforced plastic containing the above-mentioned resin and fibers.

Examples of applications of the resin composition according to the present disclosure include those in which the resin composition can be used, among the above-mentioned applications of the hollow particles according to the present invention.

### EXAMPLES

Hereinafter, the present invention will be more specifically described by way of Examples and Comparative Examples, but the present invention will not be limited only to these Examples. To be noted, "parts" and "%" are mass-based unless otherwise specified.

A variety of measurements were performed by the methods described below.

### <Volume average particle size (Dv) of hollow particles>

Using a laser diffraction particle size distribution analyzer (available from SHIMADZU Corporation, trade name: SALD-2000), the particle sizes of hollow particles were measured, and the volume average thereof was calculated assuming that the hollow particles were spherical. Then, the volume average particle size (Dv) of the hollow particles was determined.

The void ratio of the hollow particles was determined as follows: initially, the apparent density D₁ and the true density D₀ were determined, and the void ratio was calculated from the apparent density D₁ and true density D₀ determined.

### · Measurement of apparent density D₁

Initially, about 30 cm³ of hollow particles was added to a volumetric flask having a volume of 100 cm³, and the mass of hollow particles was precisely weighed. Next, isopropanol was added up to the exact gauge line of the volumetric flask into which the hollow particles were added, carefully to avoid inclusion of air bubbles. The mass of isopropanol added to the volumetric flask was precisely measured, and based on Expression (II) below, the apparent density D₁ (g/cm³) of the hollow particles was calculated. 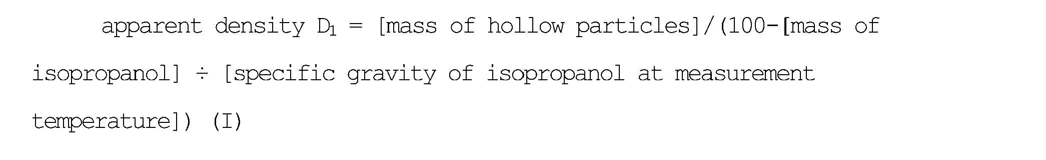 apparent density D1 = [mass of hollow particles]/(100-[mass of isopropanol] ÷ [specific gravity of isopropanol at measurement temperature]) (I)

### · Measurement of true density D₀

After the hollow particles was preliminarily ground, about 10 g of the ground pieces of the hollow particles was added to a volumetric flask having a volume of 100 cm³, and the mass of the added ground pieces was precisely weighed. In the next step, as in the measurement of the apparent density described above, isopropanol was added to the volumetric flask, the mass of isopropanol was precisely weighed, and based on Expression (II) below, the true density D₀ (g/cm³) of the hollow particles was calculated. 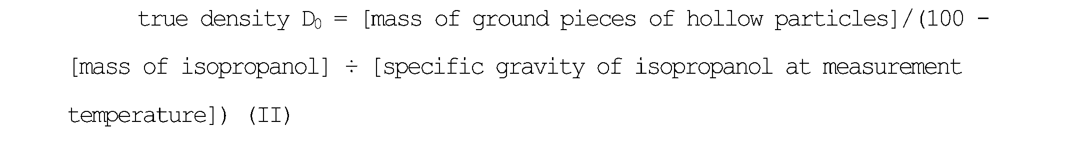 true density D0 = [mass of ground pieces of hollow particles]/(100 - [mass of isopropanol] ÷ [specific gravity of isopropanol at measurement temperature]) (II)

### · Calculation of void ratio

The value obtained by dividing the apparent density D₁ measured above by the true density D₀ measured above was multiplied by 100, and the obtained value was subtracted from 100. The obtained value was defined as the actually measured void ratio (%) of the hollow particles.

### <Change rate ΔPᵣ of peak intensity ratio Pᵣ before and after heat treatment>

Using ATR-IR (available from PERKIN ELMER Inc., product name: Spectrum One), the hollow particles were measured for infrared absorption spectrum as an absorbance spectrum. In the measurement of the hollow particles, 0.1 g of the hollow particles was placed on an upper portion of a cell, the crystal was brought into contact with the hollow particles by clamping the bearing for pressing from above, and the measurement was performed.

Then, from the infrared absorption spectrum of the hollow particles, the peak intensity ratio (P₃/P₂) of the maximum value of absorbance (P₃) in the range of 1680 to 1720 cm⁻¹ to the maximum value of absorbance (P₂) in the range of 680 to 720 cm⁻¹ was determined.

Next, the hollow particles were left in air under an environment at 130°C for 240 hours to perform a heat treatment on the hollow particles. As before the heat treatment, the hollow particles after the heat treatment were measured for infrared absorption spectrum, and from the infrared absorption spectrum of the hollow particles after the heat treatment, the peak intensity ratio (P₅/P₄) of the maximum value of absorbance (P₅) in the range of 1680 to 1720 cm⁻¹ to the maximum value of absorbance (P₄) in the range of 680 to 720 cm⁻¹ was determined.

Then, using the peak intensity ratio (P₃/P₂) before the heat treatment and the peak intensity ratio (P₅/P₄) after the heat treatment, the change rate ΔPᵣ of the peak intensity ratio Pᵣ before and after the heat treatment was calculated from Expression (2) below: 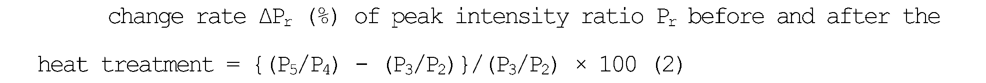 change rate ΔPr (%) of peak intensity ratio Pr before and after the heat treatment = {(P5/P4) - (P3/P2)}/(P3/P2) × 100 (2)

### <Residual double bond ratio>

Using ATR-IR (available from PERKIN ELMER Inc., product name: Spectrum One), the infrared absorption spectrum of a polymerizable monomer before the polymerization reaction used in preparation of the hollow particles and that of the shell polymer contained in the hollow particles were measured as absorbance spectra. In the measurement of the polymerizable monomer before the polymerization reaction, 0.1 g of a measurement sample comprising the same polymerizable monomer in the same proportion as the type and amount of the polymerizable monomer used in preparation of the hollow particles was placed on an upper portion of a cell, the crystal was brought into contact with the measurement sample, and the measurement was performed. In the measurement of the shell polymer contained in the hollow particles, 0.1 g of the hollow particles was placed on an upper portion of a cell, the crystal was brought into contact with the hollow particles by clamping the bearing for pressing from above, and the measurement was performed.

From the obtained infrared absorption spectra, the residual double bond ratio was calculated as follows.

In each of Examples and Comparative Examples, divinylbenzene, which was contained in the largest amount, was specified as the reference monomer, and the C-H bonds of the benzene ring contained in divinylbenzene were selected as the structural unit which does not increase nor decrease before and after the polymerization reaction.

In the infrared absorption spectrum of the polymerizable monomer before the polymerization reaction and the infrared absorption spectrum of the shell polymer contained in the hollow particles, the peak derived from the C-H bonds of the benzene ring contained in divinylbenzene was specified as the reference peak. Since the peak derived from the C-H bonds of the benzene ring contained in divinylbenzene, the peak derived from the C-H bonds of the benzene ring contained in ethylvinylbenzene, and the peak derived from the C-H bonds of the benzene ring contained in styrene appear at the same position, the value obtained by dividing the peak intensity of the reference peak by the total of the proportional content of divinylbenzene, that of ethylvinylbenzene, and that of styrene was defined as the reference peak intensity. In Comparative Examples, when styrene was not used as a polymerizable monomer in preparation of the hollow particles, the value obtained by dividing the peak intensity of the reference peak by the total of the proportional content of divinylbenzene and that of ethylvinylbenzene was defined as the reference peak intensity.

In the next step, in each of the infrared absorption spectra, the peak intensities of the peaks derived from the polymerizable unsaturated double bonds (C=C) derived from all the polymerizable monomers were measured.

The ratio (M₁/M₀) of the peak intensity (M₁) of the peak derived from the polymerizable unsaturated double bonds (C=C) to the reference peak intensity (M₀) determined from the infrared absorption spectrum of the polymerizable monomer before the polymerization reaction was determined, and was defined as the peak intensity ratio where the residual double bond ratio was 100%.

The ratio (P₁/P₀) of the peak intensity (P₁) of the peak derived from the polymerizable unsaturated double bonds (C=C) to the reference peak intensity (P₀) determined from the infrared absorption spectrum of the shell polymer contained in the hollow particles was determined in the same manner as above.

Then, using the peak intensity ratio (M₁/M₀) determined from the infrared absorption spectrum of the polymerizable monomer and the peak intensity ratio (P₁/P₀) determined from the infrared absorption spectrum of the shell polymer, the residual double bond ratio was calculated from Expression (IV) below: $residual double bond ratio \left(%\right) = \left({P}_{1}/{P}_{0}\right) / \left({M}_{1}/{M}_{0}\right) \times 100$ (IV)

### <Proportional water content>

Initially, 10 µl of pure water was precisely weighed with a microsyringe, and from the titration amount of a reagent needed to remove the water, the water content (mg) per 1 ml of a Karl Fischer reagent was calculated. Next, 100 to 200 mg of the hollow resin particles was precisely weighed, and was left for 2 hours under an environment at 30°C and 80 %RH. Thereafter, the hollow resin particles were sufficiently dispersed in a measurement flask for 5 minutes using a magnetic stirrer. Subsequently, measurement was started using a Karl Fischer aquameter (available from Kyoto Electronics Manufacturing Co., Ltd., MKA-3p), and the titration amount (ml) of the Karl Fischer reagent needed for titration was determined. From the expressions below, the water content (mg) in the hollow particles and the proportional water content (%) were calculated. 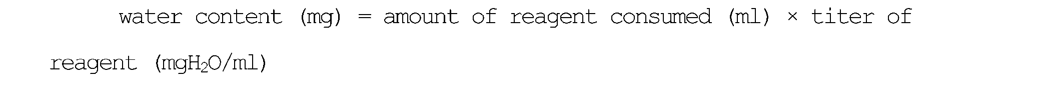 water content (mg) = amount of reagent consumed (ml) × titer of reagent (mgH2O/ml) 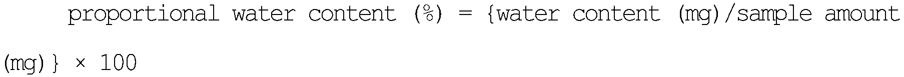 proportional water content (%) = {water content (mg)/sample amount (mg)} × 100

### <Relative permittivity and dielectric loss tangent of hollow particles>

Using a measurement apparatus (available from AET, type: ADMS01Nc), the relative permittivity and dielectric loss tangent of the hollow particles were measured at a frequency of 1 GHz and room temperature (25°C). It can be determined that a lower relative permittivity indicates more excellent insulation. It can be determined that a lower dielectric loss tangent indicates more excellent insulation.

### <Heat degradation test>

The hollow particles were left in air under an environment at 130°C for 240 hours to thermally degrade the hollow particles. Next, using a measurement apparatus (available from AET, type: ADMS01Nc), the relative permittivity and dielectric loss tangent of the hollow particles after the heat treatment were measured at a frequency of 1 GHz and room temperature (25°C). The relative permittivity was evaluated as the change rate of the measured value after the heat degradation test relative to the measured value obtained in the above-mentioned measurement of the relative permittivity of the hollow particles. The dielectric loss tangent was evaluated as the change amount of the measured value after the heat degradation test relative to the measured value obtained in the above-mentioned measurement of the dielectric loss tangent of the hollow particles.

### <Example 1>

### (1) Liquid mixture preparation step

Initially, the materials shown below were mixed, and the resulting mixture was used as an oil phase.
"DVB630" (trade name, first polymerizable monomer, available from NIPPON STEEL Chemical & Material Co., Ltd., divinylbenzene: 63%, ethylvinylbenzene: 37%) 33 parts (divinylbenzene: 20.8 parts, ethylvinylbenzene: 12.2 parts)
t-butylperoxydiethyl acetate (oil-soluble polymerization initiator, available from KAYAKU NOURYON CORPORATION, trade name "Trigonox27") 0.89 parts
hydrophobic solvent: heptane 67.0 parts

Next, in a stirring tank, under a temperature condition at 40°C, an aqueous solution of 13.72 parts of sodium hydroxide (alkali metal hydroxide salt) dissolved in 55 parts of deionized water was gradually added to an aqueous solution of 19.59 parts of magnesium chloride (watersoluble polyvalent metal salt) dissolved in 225 parts of deionized water under stirring to prepare a magnesium hydroxide colloid (poorly watersoluble metal hydroxide colloid) dispersion. After 15 minutes from the addition, the stirring was stopped, and thus an aqueous phase was obtained. The resulting magnesium hydroxide colloid dispersion contained 10 parts of magnesium hydroxide relative to 280 parts of deionized water.

The obtained aqueous phase was mixed with the oil phase, thereby preparing a liquid mixture.

### (2) Suspension step

The liquid mixture prepared in the liquid mixture preparation step (1) above was subjected to a suspension treatment using an emulsion dispersing machine (available from PRIMIX Corporation, product name: Homomixer) by stirring for 1 minute with the distal end of the rotational part set at a rotational speed of 88 m/s. Thus, a suspension in which droplets of a monomer composition encapsulating the hydrophobic solvent were dispersed was prepared.

### (3) Polymerization step

### (3-1) First polymerization step

The suspension prepared in the suspension step (2) above was heated from 40°C to 80°C in a nitrogen atmosphere, and a first polymerization reaction was performed under stirring under a temperature condition at 80°C for 1 hour. Thereby, a first precursor composition was prepared, which was a slurry in which first precursor particles encapsulating the hydrophobic solvent were dispersed in water.

### (3-2) Second polymerization step

Subsequently, 20 parts of styrene as a second polymerizable monomer was added to the first precursor composition prepared in (3-1) above, and a second polymerization reaction was performed in a nitrogen atmosphere under stirring under a temperature condition at 80°C for 24 hours. Through this polymerization reaction, a second precursor composition was prepared, which was a slurry in which second precursor particles encapsulating the hydrophobic solvent were dispersed in water.

When the second polymerizable monomer was added, the polymerization conversion ratio in the first polymerization reaction was 50%.

### (4) Washing step and solid liquid separation step

The second precursor composition prepared in the second polymerization step (3-2) above was washed (25°C, 10 minutes) with diluted sulfuric acid to adjust the pH to 5.5 or less. In the next step, after water was separated by filtration, 200 parts of deionized water was newly added to prepare a slurry again. Then, a treatment of washing with water (washing, filtration, and dehydration) was repeatedly performed at room temperature (25°C) several times, followed by separation through filtration to obtain solid matter. The obtained solid matter was dried with a dryer at a temperature of 40°C, obtaining precursor particles encapsulating the hydrophobic solvent.

### (5) Solvent removal step

The precursor particles obtained in the washing step and solid liquid separation step (4) above were subjected to a heat treatment with a vacuum dryer under a vacuum condition at 200°C for 6 hours. Thereby, the hydrophobic solvent encapsulated in the particles was removed, and hollow particles in Example 1 were obtained. From the results of observation of the obtained hollow particles with a scanning electron microscope and the value of the void ratio, it was verified that the particles were spherical and had a hollow portion. The monomer composition of the shell polymer in the obtained hollow particles was approximately the same as the composition of the polymerizable monomers subjected to polymerization.

Using the obtained hollow particles, volume average particle size (Dv), void ratio, residual double bond ratio, change rate ΔPᵣ of the peak intensity ratio Pᵣ before and after the heat treatment, proportional water content, and relative permittivity and dielectric loss tangent of the hollow particles were measured, and the heat degradation test was performed. The results are shown in Table 1.

### <Example 2>

Hollow particles were obtained in the same manner as in Example 1 except that in the liquid mixture preparation step (1), "DVB630" was replaced by 33 parts (divinylbenzene: 22.77 parts, ethylvinylbenzene: 10.23 parts) of "DVB690" (trade name, available from NIPPON STEEL Chemical & Material Co., Ltd., divinylbenzene: 69%, ethylvinylbenzene: 31%), and were evaluated likewise. When the second polymerizable monomer was added, the polymerization conversion ratio in the first polymerization reaction was 50%. The monomer composition of the shell polymer in the obtained hollow particles was approximately the same as the composition of the polymerizable monomers subjected to polymerization. The results are shown in Table 1.

### <Example 3>

Hollow particles were obtained in the same manner as in Example 1 except that in the liquid mixture preparation step (1), "DVB630" was replaced by 33 parts (divinylbenzene: 26.73 parts, ethylvinylbenzene: 6.27 parts) of "DVB810" (trade name, available from NIPPON STEEL Chemical & Material Co., Ltd., divinylbenzene: 81%, ethylvinylbenzene: 19%), and were evaluated likewise. When the second polymerizable monomer was added, the polymerization conversion ratio in the first polymerization reaction was 50%. The monomer composition of the shell polymer in the obtained hollow particles was approximately the same as the composition of the polymerizable monomers subjected to polymerization. The results are shown in Table 1.

### <Example 4>

Hollow particles were obtained in the same manner as in Example 1 except that in the polymerization step (3-2), the amount of styrene added to the first precursor composition was changed from 20 parts to 9 parts, and were evaluated likewise. When the second polymerizable monomer was added, the polymerization conversion ratio in the first polymerization reaction was 50%. The monomer composition of the shell polymer in the obtained hollow particles was approximately the same as the composition of the polymerizable monomers subjected to polymerization. The results are shown in Table 1.

### <Example 5>

Hollow particles were obtained in the same manner as in Example 4 except that in the liquid mixture preparation step (1), the amount of "DVB630" used was changed from 33 parts to 38.8 parts (divinylbenzene: 24.4 parts, ethylvinylbenzene: 14.4 parts) and the amount of heptane used was changed from 67.0 parts to 61.2 parts, and were evaluated likewise. When the second polymerizable monomer was added, the polymerization conversion ratio in the first polymerization reaction was 40%. The monomer composition of the shell polymer in the obtained hollow particles was approximately the same as the composition of the polymerizable monomers subjected to polymerization. The results are shown in Table 1.

### <Example 6>

### (1) Liquid mixture preparation step and (2) suspension step

A suspension in which droplets of the monomer composition encapsulating the hydrophobic solvent were dispersed in water was prepared in the same manner as in Example 1.

### (3) Polymerization step

### (3-1) First polymerization step

The suspension prepared in the suspension step (2) above was heated from 40°C to 80°C in a nitrogen atmosphere, and the first polymerization reaction was performed under stirring at a temperature condition at 80°C for 1 hour. Thereby, a first precursor composition was prepared, which was a slurry in which first precursor particles encapsulating the hydrophobic solvent were dispersed in water.

### (3-2) Second polymerization step

Subsequently, 18 parts of styrene as the second polymerizable monomer was added to the first precursor composition prepared in (3-1) above, and the second polymerization reaction was performed in a nitrogen atmosphere under stirring under a temperature condition at 80°C for 6 hours. Thereby, a second precursor composition was prepared, which was a slurry in which second precursor particles were dispersed in water.

When the second polymerizable monomer was added, the polymerization conversion ratio in the second polymerization reaction was 50%.

### (3-3) Third polymerization step

Next, 2 parts of divinylbenzene as the third polymerizable monomer was added to the second precursor composition prepared in (3-2) above, and the third polymerization reaction was performed in a nitrogen atmosphere under stirring under a temperature condition at 80°C for 18 hours. Thereby, a second precursor composition through the third polymerization step was obtained.

When the third polymerizable monomer was added, the polymerization conversion ratio in the second polymerization reaction was 98%.

### (4) Washing step and solid liquid separation step and (5) solvent removal step

Hollow particles were obtained in the same manner as in Example 1 except that the second precursor composition through the third polymerization step obtained in the third polymerization step (3-3) above was used, and were evaluated likewise. The monomer composition of the shell polymer in the obtained hollow particles was approximately the same as the composition of the polymerizable monomers subjected to polymerization. The results are shown in Table 2.

### <Example 7>

Hollow particles were obtained in the same manner as in Example 6 except that in the third polymerization step (3-3), instead of divinylbenzene, 2 parts of t-butylaminoethyl methacrylate was added to the second precursor composition, and were evaluated likewise. When the second polymerizable monomer was added, the polymerization conversion ratio in the first polymerization reaction was 50%. When the third polymerizable monomer was added, the polymerization conversion ratio in the second polymerization reaction was 98%. The monomer composition of the shell polymer in the obtained hollow particles was approximately the same as the composition of the polymerizable monomers subjected to polymerization. The results are shown in Table 2.

### <Example 8>

Hollow particles were obtained in the same manner as in Example 1 except that in the solvent removal step (5), the hydrophobic solvent encapsulated in the particles was removed by subjecting the precursor particles obtained in the washing step and solid liquid separation step (4) to a heat treatment with an inert gas oven in a nitrogen atmosphere at 300°C for 12 hours, and were evaluated likewise. The monomer composition of the shell polymer in the obtained hollow particles was approximately the same as the composition of the polymerizable monomers subjected to polymerization. The results are shown in Table 2.

### <Example 9>

Hollow particles were obtained in the same manner as in Example 1 except that in the second polymerization step (3-2), the amount of styrene added to the first precursor composition was changed from 20 parts to 2 parts, and in the solvent removal step (5), the hydrophobic solvent encapsulated in the particles was removed by subjecting the precursor particles obtained in the washing step and solid liquid separation step (4) to a heat treatment with an inert gas oven in a nitrogen atmosphere at 300°C for 12 hours, and were evaluated likewise. When the second polymerizable monomer was added, the polymerization conversion ratio in the first polymerization reaction was 50%. The monomer composition of the shell polymer in the obtained hollow particles was approximately the same as the composition of the polymerizable monomers subjected to polymerization. The results are shown in Table 2.

### <Comparative Example 1>

### (1) Liquid mixture preparation step

A liquid mixture was prepared in the same manner as in Example 1 except that the materials shown below were mixed, and the resulting mixture was used as the oil phase.
"DVB960" (trade name, first polymerizable monomer, available from NIPPON STEEL Chemical & Material Co., Ltd., divinylbenzene: 96%, ethylvinylbenzene: 4%) 44.3 parts (divinylbenzene: 42.53 parts, ethylvinylbenzene: 1.77 parts)
t-butylperoxydiethyl acetate 0.89 parts
hydrophobic solvent: heptane 55.7 parts

### (2) Suspension step

A suspension in which droplets of the monomer composition encapsulating the hydrophobic solvent were dispersed in water was prepared in the same manner as in Example 1 except that the liquid mixture prepared in the liquid mixture preparation step (1) was used.

### (3) Polymerization step

### (3-1) First polymerization step

The suspension obtained in the suspension step (2) above was heated from 40°C to 80°C in a nitrogen atmosphere, and a polymerization reaction was performed under stirring under a temperature condition at 80°C for 25 hours. Through this polymerization reaction, a first precursor composition was prepared, which was a slurry in which precursor particles encapsulating the hydrophobic solvent were dispersed in water.

### (4) Washing step and solid liquid separation step and (5) solvent removal step

Hollow particles were obtained in the same manner as in Example 1 except that the first precursor composition prepared in the polymerization step (3-1) above was used, and were evaluated likewise. The monomer composition of the shell polymer in the obtained hollow particles was approximately the same as the composition of the polymerizable monomers subjected to polymerization. The results are shown in Table 3.

### <Comparative Example 2>

Hollow particles were obtained in the same manner as in Comparative Example 1 except that in the liquid mixture preparation step (1), "DVB960" was replaced by 44.3 parts of "DVB630" (divinylbenzene: 27.91 parts, ethylvinylbenzene: 16.39 parts), and were evaluated likewise. The monomer composition of the shell polymer in the obtained hollow particles was approximately the same as the composition of the polymerizable monomers subjected to polymerization. The results are shown in Table 3.

### <Comparative Example 3>

Hollow particles were obtained in the same manner as in Comparative Example 2 except that in the liquid mixture preparation step (1), the amount of "DVB630" used was changed from 44.3 parts to 39.1 parts (divinylbenzene: 24.6 parts, ethylvinylbenzene: 14.5 parts) and the amount of heptane used was changed from 55.7 parts to 60.8 parts, and were evaluated likewise. The monomer composition of the shell polymer in the obtained hollow particles was approximately the same as the composition of the polymerizable monomers subjected to polymerization. The results are shown in Table 3.

### <Comparative Example 4>

### (1) Liquid mixture preparation step

Initially, the materials shown below were mixed, and the resulting mixture was used as an oil phase.
"DVB810" 1.85 parts (first polymerizable monomer, divinylbenzene: 1.5 parts, ethylvinylbenzene: 0.35 parts)
styrene 1.15 parts
polyethylene glycol propylene glycol monomethacrylate (available from NOF CORPORATION, trade name "Blemmer 50PEP-300") 0.6 parts
t-butylperoxydiethyl acetate 0.89 parts
hydrophobic solvent: heptane 2.4 parts

Next, in a stirring tank, 34 g of deionized water and 0.017 parts of "RAPISOL A-80" (trade name, surfactant, available from NOF CORPORATION) were mixed, and the resulting mixture was used as an aqueous phase.

The obtained aqueous phase was mixed with the oil phase, thereby preparing a liquid mixture.

### (2) Suspension step, (3) polymerization step, (4) washing step and solid liquid separation step, and (5) solvent removal step

Hollow particles were obtained in the same manner as in Comparative Example 1 except that the liquid mixture prepared in the liquid mixture preparation step (1) was used, and were evaluated likewise. The monomer composition of the polymer in the obtained hollow particles was approximately the same as the composition of the polymerizable monomers subjected to polymerization. The results are shown in Table 3.

### <Comparative Example 5>

Hollow particles were obtained in the same manner as in Example 1 except that in the second polymerization step (3-2), the amount of styrene added to the first precursor composition was changed from 20 parts to 5 parts, and were evaluated likewise. When the second polymerizable monomer was added, the polymerization conversion ratio in the first polymerization reaction was 50%. The monomer composition of the shell polymer in the obtained hollow particles was approximately the same as the composition of the polymerizable monomers subjected to polymerization. The results are shown in Table 3.

### [Table 1]

**Table 1**

| | | | | | Example | | | | |
|---|---|---|---|---|---|---|---|---|---|
| | | | | | 1 | 2 | 3 | 4 | 5 |
| <Materials used in preparation of hollow particles> | | | | | | | | | |
| | | First polymerization reaction | | | | | | | |
| | | Oil phase | Divinylbenzene | [parts] | 20.8 | 22.77 | 26.73 | 20.8 | 24.4 |
| | | | Ethylvinylbenzene | [parts] | 12.2 | 10.23 | 6.27 | 12.2 | 14.4 |
| | | | Styrene | [parts] | | | | | |
| | | | Polyethylene glycol propylene glycol monomethacrylate | [parts] | | | | | |
| | | | t-Butylperoxydiethyl acetate | [parts] | 0.89 | 0.89 | 0.89 | 0.89 | 0.89 |
| | | | Heptane | [parts] | 67.0 | 67.0 | 67.0 | 67.0 | 61.2 |
| | | Aqueous phase | Magnesium chloride | [parts] | 19.59 | 19.59 | 19.59 | 19.59 | 19.59 |
| | | | Sodium hydroxide | [parts] | 13.72 | 13.72 | 13.72 | 13.72 | 13.72 |
| | | | A-80 | [parts] | | | | | |
| | | | Deionized water | [parts] | 280 | 280 | 280 | 280 | 280 |
| | | Second polymerization reaction | | | | | | | |
| | | Styrene | | [parts] | 20 | 20 | 20 | 9 | 9 |
| | | Polymerization conversion ratio when second polymerizable monomer is added | | [%] | 50 | 50 | 50 | 50 | 40 |
| | | Third polymerization reaction | | | | | | | |
| | | Divinylbenzene | | [parts] | | | | | |
| | | t-Butylaminoethyl methacrylate | | [parts] | | | | | |
| | | Polymerization conversion ratio when third polymerizable monomer is added | | [%] | | | | | |

| <Hollow particles> | | | | | | | | | |
|---|---|---|---|---|---|---|---|---|---|
| | | Proportion of non-cross-linkable monomer unit | | [mass%] | 61 | 57 | 50 | 51 | 49 |
| | | Proportion of hydrocarbon monomer unit | | [mass%] | 100 | 100 | 100 | 100 | 100 |
| | | Volume average particle size (Dv) | | [µm] | 2.4 | 2.7 | 3.0 | 3.1 | 3.2 |
| | | Void ratio | | [%] | 65 | 65 | 65 | 70 | 65 |
| | | Change rate (ΔPr) of peak intensity ratio before and after heat treatment | | [%] | 0.50 | 0.62 | 4.1 | 3.90 | 2.90 |
| | | Residual double bond ratio | | [%] | 1.9 | 2.5 | 4.7 | 4.5 | 4.5 |
| | | Proportional water content | | [mass%] | 0.6 | 0.6 | 0.7 | 0.7 | 0.7 |

| <Dielectric properties of hollow particles> | | | | | | | | | |
|---|---|---|---|---|---|---|---|---|---|
| | | Before heat degradation test | | | | | | | |
| | | Relative permittivity (1GHz) | | | 1.42 | 1.42 | 1.42 | 1.36 | 1.42 |
| | | Dielectric tangent loss (1GHz) | | | 1.70×10⁻⁴ | 1.70×10⁻⁴ | 1.70×10⁻⁴ | 1.90×10⁻⁴ | 1.90×10⁻⁴ |
| | | After heat degradation test | | | | | | | |
| | | Relative permittivity (1GHz) | | | 1.42 | 1.42 | 1.42 | 1.36 | 1.42 |
| | | Change rate of relative permittivity | | [%] | 0 | 0 | 0 | 0 | 0 |
| | | Dielectric tangent loss (1GHz) | | | 1.80×10⁻⁴ | 1.80×10⁻⁴ | 3.20×10⁻⁴ | 3.10×10⁻⁴ | 3.00×10⁻⁴ |
| | | Change amount of dielectric tangent loss | | | 1.0×10⁻⁵ | 1.0×10⁻⁵ | 1.50×10⁻⁴ | 1.20×10⁻⁴ | 1.10×10⁻⁴ |

### [Table 2]

**Table 2**

| | | | | | Exam mple | | | |
|---|---|---|---|---|---|---|---|---|
| | | | | | 6 | 7 | 8 | 9 |
| <Materials used in preparation of hollow particles> | | | | | | | | |
| | | First polymerization reaction | | | | | | |
| | | Oil phase | Divinylbenzene | [parts] | 20.8 | 20.8 | 20.8 | 20.8 |
| | | | Ethylvinylbenzene | [parts] | 12.2 | 12.2 | 12.2 | 12.2 |
| | | | Styrene | [parts] | | | | |
| | | | Polyethylene glycol propylene glycol monomethacrylate | [parts] | | | | |
| | | | t-Butylperoxydiethyl acetate | [parts] | 0.89 | 0.89 | 0.89 | 0.89 |
| | | | Heptane | [parts] | 67.0 | 67.0 | 67.0 | 67.0 |
| | | Aqueous phase | Magnesium chloride | [parts] | 19.59 | 19.59 | 19.59 | 19.59 |
| | | | Sodium hydroxide | [parts] | 13.72 | 13.72 | 13.72 | 13.72 |
| | | | A-80 | [parts] | | | | |
| | | | Deionized water | [parts] | 280 | 280 | 280 | 280 |
| | | Second polymerization reaction | | | | | | |
| | | Styrene | | [parts] | 18 | 18 | 20 | 2 |
| | | Polymerization conversion ratio when second polymerizable monomer is added | | [%] | 50 | 50 | 50 | 50 |
| | | Third polymerization reaction | | | | | | |
| | | Divinylbenzene | | [parts] | 2 | | | |
| | | t-Butylaminoethyl methacrylate | | [parts] | | 2 | | |
| | | Polymerization conversion ratio when third polymerizable monomer is added | | [%] | 98 | 98 | | |

| <Hollow particles> | | | | | | | | |
|---|---|---|---|---|---|---|---|---|
| | | Proportion of non-cross-linkable monomer unit | | [mass%] | 61 | 61 | 61 | 41 |
| | | Proportion of hydrocarbon monomer unit | | [mass%] | 100 | 96.2 | 100 | 100 |
| | | Volume average particle size (Dv) | | [µm[ | 2.8 | 2.8 | 2.4 | 2.7 |
| | | Void ratio | | [%] | 65 | 65 | 65 | 72 |
| | | Change rate (ΔPr) of peak intensity ratio before and after heat treatment | | [%] | 1.40 | 4.60 | 0.41 | 0.54 |
| | | Residual double bond ratio | | [%] | 2 | 2 | 1.6 | 2.5 |
| | | Proportional water content | | [mass%] | 0.6 | 0.9 | 0.6 | 0.6 |

| <Dielectric properties of hollow particles> | | | | | | | | |
|---|---|---|---|---|---|---|---|---|
| | | Before heat degradation test | | | | | | |
| | | Relative permittivity (1GHz) | | | 1.42 | 1.43 | 1.42 | 1.35 |
| | | Dielectric tangent loss (1GHz) | | | 2.10×10⁻⁴ | 2.50×10⁻⁴ | 1.70×10⁻⁴ | 1.70×10⁻⁴ |
| | | After heat degradation test | | | | | | |
| | | Relative permittivity (1GHz) | | | 1.42 | 1.43 | 1.42 | 1.36 |
| | | Change rate of relative permittivity | | [%] | 0 | 0 | 0 | 0.7 |
| | | Dielectric tangent loss (1GHz) | | | 2.80×10⁻⁴ | 3.20×10⁻⁴ | 1.80×10⁻⁴ | 1.80×10⁻⁴ |
| | | Change amount of dielectric tangent loss | | | 7.0×10⁻⁵ | 7.0×10⁻⁵ | 1.0×10⁻⁵ | 1.0×10⁻⁵ |

### [Table 3]

**Table 3**

| | | | | | Comparative Example | | | | |
|---|---|---|---|---|---|---|---|---|---|
| | | | | | 1 | 2 | 3 | 4 | 5 |
| <Materials used in preparation of hollow particles> | | | | | | | | | |
| | | First polymerization reaction | | | | | | | |
| | | Oil phase | Divinylbenzene | [parts] | 42.53 | 27.91 | 24.6 | 1.5 | 20.8 |
| | | | Ethylvinylbenzene | [parts] | 1.77 | 16.39 | 14.5 | 0.35 | 12.2 |
| | | | Styrene | [parts] | | | | 1.15 | |
| | | | Polyethylene glycol propylene glycol monomethacrylate | [parts] | | | | 0.6 | |
| | | | t-Butylperoxydiethyl acetate | [parts] | 0.89 | 0.89 | 0.89 | 0.89 | 0.89 |
| | | | Heptane | [parts] | 55.7 | 55.7 | 60.8 | 2.4 | 67.0 |
| | | Aqueous phase | Magnesium chloride | [parts] | 19.59 | 19.59 | 19.59 | | 19.59 |
| | | | Sodium hydroxide | [parts] | 13.72 | 13.72 | 13.72 | | 13.72 |
| | | | A-80 | [parts] | | | | 0.017 | |
| | | | Deionized water | [parts] | 280 | 280 | 280 | 34 | 280 |
| | | Second polymerization reaction | | | | | | | |
| | | Styrene | | [parts] | | | | | 5 |
| | | Polymerization conversion ratio when second polymerizable monomer is added | | [%] | | | | | 50 |
| | | Third polymerization reaction | | | | | | | |
| | | Divinylbenzene | | [parts] | | | | | |
| | | t-Butylaminoethyl methacrylate | | [parts] | | | | | |
| | | Polymerization conversion ratio when third polymerizable monomer is added | | [%] | | | | | |

| <Hollow particles> | | | | | | | | | |
|---|---|---|---|---|---|---|---|---|---|
| | | Proportion of non-cross-linkable monomer unit | | [mass%] | 4 | 37 | 37 | 58 | 45 |
| | | Proportion of hydrocarbon monomer unit | | [mass%] | 100 | 100 | 100 | 82.9 | 100 |
| | | Volume average particle size (Dv) | | [µm] | 3.3 | 3.5 | 3.4 | 0.31 | 3.6 |
| | | Void ratio | | [%] | 65 | 65 | 68 | 50 | 72 |
| | | Change rate (ΔPr) of peak intensity ratio before and after heat treatment | | [%] | 32 | 7 | 25 | 41 | 18 |
| | | Residual double bond ratio | | [%] | 13 | 7 | 11.1 | 4.5 | 14.0 |
| | | Proportional water content | | [mass%] | 0.7 | 0.7 | 0.7 | 2.8 | 0.7 |

| <Dielectric properties of hollow particles> | | | | | | | | | |
|---|---|---|---|---|---|---|---|---|---|
| | | Before heat degradation test | | | | | | | |
| | | Relative permittivity (1GHz) | | | 1.43 | 1.42 | 1.40 | 1.70 | 1.38 |
| | | Dielectric tangent loss (1GHz) | | | 4.60×10⁻⁴ | 4.40×10⁻⁴ | 3.50×10⁻⁴ | 1.10×10⁻³ | 5.20×10⁻⁴ |
| | | After heat degradation test | | | | | | | |
| | | Relative permittivity (1GHz) | | | 1.43 | 1.42 | 1.46 | 1.77 | 1.38 |
| | | Change rate of relative permittivity | | [%] | 0 | 0 | 4 | 4 | 0 |
| | | Dielectric tangent loss (1GHz) | | | 1.80×10⁻³ | 1.10×10⁻³ | 1.01×10⁻³ | 2.00×10⁻³ | 1.90×10⁻³ |
| | | Change amount of dielectric tangent loss | | | 1.34×10⁻³ | 6.6×10⁻⁴ | 6.6×10⁻⁴ | 9.0×10⁻⁴ | 1.38×10⁻³ |

Tables 1 and 2 show that in the hollow particles each including a shell containing a resin and a hollow portion surrounded by the shell wherein the void ratio was 50% or more and the change rate ΔPᵣ of the peak intensity ratio Pᵣ determined by infrared spectroscopy before and after the heat treatment in air at 130°C for 240 hours was 5% or less, the dielectric properties were excellent, and a reduction in dielectric properties under a high temperature condition was suppressed (Examples 1 to 9).

In contrast, Table 3 shows that when the hollow particles were subjected to the heat treatment in air at 130°C for 240 hours and the change rate ΔPᵣ of the peak intensity ratio Pᵣ determined by infrared spectroscopy before and after the heat treatment was higher than 5%, the obtained hollow particles had inferior dielectric properties, and the dielectric properties after the heat degradation test were significantly reduced (Comparative Examples 1 to 5).

## Claims

1. Hollow particles each including a shell containing a resin and a hollow portion surrounded by the shell,
wherein the hollow particles have a void ratio of 50% or more, and
when the hollow particles are subjected to a heat treatment in air at 130°C for 240 hours, a change rate ΔPᵣ of a peak intensity ratio Pᵣ determined by infrared spectroscopy before and after the heat treatment is 5% or less, the peak intensity ratio Pᵣ being calculated from Expression (1) below: 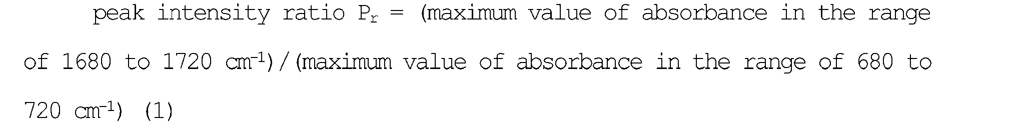 peak intensity ratio Pr = (maximum value of absorbance in the range of 1680 to 1720 cm-1)/(maximum value of absorbance in the range of 680 to 720 cm-1) (1)

2. The hollow particles according to claim 1, wherein a shell polymer forming the resin has a residual double bond ratio of 15% or less.

3. The hollow particles according to claim 1 or 2, wherein the hollow particles have a proportional water content of 2.5% by mass or less.

4. The hollow particles according to any one of claims 1 to 3, wherein the shell polymer forming the resin contains 80% by mass or more of a hydrocarbon monomer unit.

5. The hollow particles according to any one of claims 1 to 4, wherein the shell polymer forming the resin contains a cross-linkable monomer unit and a non-cross-linkable monomer unit, and
the proportion of the non-cross-linkable monomer unit in the shell polymer is 40 to 80% by mass.

6. The hollow particles according to any one of claims 1 to 5, wherein the hollow particles have a volume average particle size of 1 to 10 µm.
